# FASCICULE DE BREVET EUROPEEN

(11) **EP 1 449 402 B1**
(45) Date de publication et mention de la délivrance du brevet: **23.10.2019**
(21) Numéro de dépôt: 02796872.6
(22) Date de dépôt: 25.11.2002
(51) Int. Cl.: H04W 36/30, H04L 12/28, H04L 29/06

(54) **SYSTEME ET PROCEDE DE SELECTION DE POINT D'ACCES**
SYSTEM UND VERFAHREN ZUR AUSWAHL EINER ZUGANGSPUNKT
SYSTEM AND METHOD FOR SELECTING ACCESS POINT

(30) Priorité: 26.11.2001 FR 0115403
(43) Date de publication de la demande: 25.08.2004
(73) Titulaire: 3G Licensing S.A., 2132 Luxembourg (LU)
(72) Inventeur: KHOUAJA, Youssef, EL Menzeh 9 A Tunis 1004 (TN); BERTIN, Philippe, F-35690 Acigne (FR); GUILLOUARD, Karine, F-35135 Chantepie (FR); CHARLES, Olivier, F-75014 Paris (FR)
(74) Mandataire: Metroconsult Srl
(86) Numéro de dépôt international: PCT/FR2002/004042
(87) Numéro de publication internationale: WO 2003/047296

(56) Documents cités:
- EP-A- 1 026 910
- EP-A- 1 113 694
- WO-A-96/06512
- US-B1- 6 289 220

## Description

La présente invention concerne un système de télécommunication incluant :
. au moins un émetteur/récepteur mobile,
. une pluralité de points d'accès, chacun desquels étant apte à communiquer avec l'émetteur/récepteur mobile lorsque ledit émetteur/récepteur est situé dans une zone de couverture dudit point d'accès, et
. un réseau de communication autorisant des communications entre lesdits points d'accès.

De tels systèmes sont couramment employés pour opérer par exemple des transmissions de données selon un protocole Internet connu sous le nom de protocole IP. Les points d'accès sont alors constitués par des stations de base et le réseau de communication peut être un réseau de type Ethernet ou Internet. Dans un tel système de télécommunication, c'est usuellement l'émetteur/récepteur mobile qui choisit le point d'accès avec lequel il souhaite communiquer. En général, dès qu'un émetteur/récepteur mobile quitte la zone de couverture d'un point d'accès avec lequel il est en communication pour entrer dans une zone de couverture d'un autre point d'accès, l'émetteur/récepteur se rattache spontanément à cet autre point d'accès, appelé alors nouveau point d'accès, sans consultation de ce nouveau point d'accès quant à sa capacité à accepter un tel rattachement. Ceci pose au moins deux types de problèmes :
D'une part, il est possible que le nouveau point d'accès soit déjà surchargé, c'est-à-dire qu'il peut déjà avoir des difficultés à assurer une bonne exécution de communications en cours avec tous les émetteurs/récepteurs mobiles qui sont présents dans sa zone de couverture et qui sont déjà rattachés audit nouveau point d'accès, du fait d'un trop grand nombre de tels émetteurs/récepteurs, situation qui est connue sous le terme de saturation du point d'accès. Un rattachement intempestif d'un ou plusieurs émetteurs/récepteurs supplémentaires ne pourrait alors qu'aggraver une telle situation et pourrait nuire à l'intégrité de l'ensemble des communications en cours.

D'autre part, lorsqu'un émetteur/récepteur mobile se rattache spontanément à un nouveau point d'accès, il peut être amené à changer d'identifiant, et recevoir en retour une nouvelle adresse IP pour reprendre l'exemple du protocole IP évoqué plus haut, de sorte que, si un échange de données entre l'émetteur/récepteur considéré et un interlocuteur distant est en cours d'exécution au moment de ce rattachement spontané, des données risquent d'être perdues puisque destinées à être transmises ou reçues vers ou depuis une entité munie d'un identifiant qui aura été rendu caduc par le rattachement spontané opéré entre-temps par l'émetteur/récepteur considéré

Le procédé de surveillance décrit dans EP1026910A1 répond partiellement aux inconvénients ci-dessus en permettant à un terminal mobile dans un réseau cellulaire de basculer entre deux modes de surveillance différents, mode complet et mode réduit. Le premier (c'est-à-dire le mode complet) mesure le signal provenant d'un nombre maximum de stations de base voisines tandis que le dernier (c'est-à-dire le mode réduit) mesure le signal provenant d'un nombre réduit de stations de base voisines. En commutant de manière opportuniste entre les modes de surveillance ci-dessus, le procédé est capable de réduire la consommation d'énergie d'un terminal mobile en raison du nombre inférieur de mesures en mode réduit. Le document US6289220B 1 décrit un procédé de gestion de plusieurs contrôleurs dans un réseau cellulaire dans lequel la liste des cellules voisines à surveiller est mise à jour lors de la modification de l'état du contrôleur.

La présente invention a pour but de remédier dans une large mesure à ces inconvénients en proposant un système de télécommunication dans lequel un changement de point d'accès ne peut en principe être exécuté à la seule initiative d'un émetteur/récepteur mobile, mais est au contraire exécuté après analyse d'un environnement propre audit émetteur/récepteur mobile.

A cet effet, selon l'invention, un système de télécommunication conforme au paragraphe introductif est caractérisé en ce qu'il inclut en outre au moins un gestionnaire de mobilité apte à identifier, en fonction de conditions de fonctionnement des points d'accès, un point d'accès spécifique avec lequel l'émetteur/récepteur mobile doit établir une communication.

Dans un tel système de télécommunication, le gestionnaire de mobilité est capable d'établir, pour un émetteur/récepteur mobile déterminé, si un changement de point d'accès est opportun ou non, et quel point d'accès est le mieux adapté pour servir de nouveau point d'accès audit émetteur/récepteur, ce qui limite les risques de saturation desdits points d'accès. Si nécessaire, le gestionnaire pourra déterminer un nouvel identifiant à attribuer à l'émetteur/récepteur lorsqu'il sera rattaché à son nouveau point d'accès, choisi par le gestionnaire de mobilité. Le gestionnaire de mobilité pourra être muni de moyens pour exercer un contrôle sur les données en cours de transmission via le réseau de communication, auquel cas le gestionnaire pourra en outre remplacer, par exemple au sein des données en cours de transmission vers l'émetteur/récepteur au moment du changement de point d'accès, l'ancien identifiant de l'émetteur/récepteur considéré par ledit nouvel identifiant, de sorte que ces données ne soient pas perdues comme dans les systèmes connus, mais puissent parvenir audit émetteur/récepteur via son nouveau point d'accès.

Pour accomplir les fonctions qui lui sont attribuées selon l'invention, le gestionnaire de mobilité doit collecter des informations sur l'environnement de chacun des émetteurs/récepteurs mobiles présents au sein du système, ce qui représente une charge de travail considérable.

De telles informations d'environnement pourront être constituées par des informations de localisation géographique d'un émetteur/récepteur mobile, comme une identification du pays, de la ville, ou de coordonnées géographiques du lieu ou se trouve ledit émetteur/récepteur mobile.

Les informations d'environnement pourront également être relatives à un profil d'un utilisateur de l'émetteur/récepteur mobile, et pourront entre autres contenir des informations d'autorisation d'accès définissant des droits d'accès à certains points d'accès en fonction d'une appartenance d'un tel utilisateur à un groupe particulier d'utilisateurs comme par exemple un groupe d'étudiants, de professeurs ou de visiteurs présents sur un même campus universitaire. Les informations d'environnement relatives à un profil pourront également contenir des informations représentatives de restriction d'accès à certains points d'accès, par exemple à un étage donné d'un immeuble hébergeant le personnel d'une entreprise.

Les informations d'environnement relatives à un profil pourront encore contenir des informations permettant une différentiation de conditions d'accès en fonction de différents types de réseaux publics utilisés par l'émetteur/récepteur mobile pour entrer en communication avec le système de télécommunication conforme à l'invention, pour autoriser par exemple un accès via un réseau de communication local mis à disposition de l'utilisateur dans un aéroport et interdire par contre un accès via un réseau de communication local mis à disposition de l'utilisateur dans un hôtel.

Ainsi, dans certains modes de réalisation de l'invention, le gestionnaire de mobilité pourra transmettre à l'émetteur/récepteur des informations permettant audit émetteur/récepteur mobile d'identifier des points d'accès auxquels il pourra être autorisé à se connecter. De telles informations pourront être matérialisées par des noms de réseaux dont l'accès est autorisé, comme des identifiants de type PLMN (abréviation de l'expression anglaise Public Land Mobile Network connue de l'homme du métier) pour des réseaux cellulaires, des identifiants de type SSID (abréviation de l'expression anglaise Service Set IDentifier connue de l'homme du métier) des points d'accès à des réseaux locaux sans fil, des identifiants de type NAI (abréviation de l'expression anglaise Network Address Identifier connue de l'homme du métier) pour des réseaux maillés tel le réseau Internet, ou encore des préfixes de routeurs de tels réseaux maillés.

Dans une variante de l'invention, un émetteur/récepteur mobile inclus dans le système sera muni de moyens de mémorisation destinés à mémoriser, lorsque ledit émetteur/récepteur est en communication avec un point d'accès appelé point d'accès courant, une liste de points d'accès voisins du point d'accès courant, laquelle liste lui ayant été transmise par le gestionnaire.

Le gestionnaire de mobilité pourra envoyer cette liste à diverses reprises à l'émetteur/récepteur mobile, et opérer ainsi des mises à jour, ou seulement au moment du rattachement de l'émetteur/récepteur mobile à son point d'accès courant.

Dans cette variante de l'invention, le gestionnaire de mobilité pourra, après avoir mené une analyse succincte de l'environnement d'un émetteur/récepteur mobile et avoir sélectionné, en tant que points d'accès voisins, des points d'accès auxquels le gestionnaire de mobilité considère que l'émetteur/récepteur mobile pourrait être autorisé à se rattacher, envoyer audit émetteur/récepteur la liste de ces points d'accès voisins afin que ledit émetteur/récepteur puisse mener par lui-même des opérations de collecte d'informations concernant ces points d'accès voisins pour le compte du gestionnaire de mobilité. L'émetteur/récepteur mobile pourra ainsi se voir attribuer une fonction de capteur mis en œuvre à distance par le gestionnaire de mobilité, ce qui permettra de répartir parmi les émetteurs/récepteurs mobiles une partie substantielle de la charge de travail sinon dévolue au gestionnaire de mobilité selon l'invention.

Un émetteur/récepteur mobile inclus dans le système de télécommunication conforme à l'invention sera avantageusement muni de moyens de mesure pour effectuer au moins une mesure de qualité d'une communication qu'il pourrait établir avec au moins un point d'accès voisin de son point d'accès courant.

De telles mesures permettent à un émetteur/récepteur mobile d'opérer une surveillance de son environnement, en principe au moyen d'échanges de signaux entre l'émetteur/récepteur mobile et ses points d'accès voisins. Une telle surveillance peut être faite en continu, comme le font usuellement les émetteurs/récepteurs mobiles avec leurs point d'accès courants, mais une surveillance continue risque de mobiliser inutilement des ressources essentielles au fonctionnement de l'émetteur/récepteur mobile, comme par exemple une batterie assurant son alimentation en énergie. Par ailleurs, des envois fréquents au gestionnaire de mobilité de rapports, dont chacun serait consécutif à une opération de surveillance, risquent de générer un volume de communications considérable qui peut perturber l'environnement de l'émetteur/récepteur en provoquant une saturation des points d'accès. Dans un mode de réalisation particulier des moyens de mesure, ceux-ci seront aptes à n'être activés que lorsque la qualité de la communication entre l'émetteur/récepteur mobile et le point d'accès courant est inférieure à un seuil de référence prédéterminé.

Ceci permet d'assurer qu'un émetteur/récepteur mobile donné ne déclenche une opération de surveillance que dans des situations où les résultats d'une telle opération ont de fortes chances d'être effectivement exploités, puisque la faible qualité de la communication entre ledit émetteur/récepteur mobile et son point d'accès courant signale un risque d'interruption intempestive de ladite communication et pourra conduire à un changement de point d'accès courant.

Dans un mode de mise en œuvre avantageux des moyens de mesure, une valeur du seuil de référence est mémorisée dans les moyens de mémorisation de l'émetteur/récepteur mobile après réception par celui-ci de ladite valeur en provenance du gestionnaire de mobilité.

Ce mode de mise en œuvre permet au gestionnaire de mobilité d'exercer un contrôle sur les opérations de surveillance de leur environnement qui sont menées par les émetteurs/récepteurs mobiles, puisque c'est le gestionnaire de mobilité qui détermine, au travers du choix de la valeur de seuil, le niveau de qualité de communication qu'un émetteur/récepteur mobile doit considérer comme étant acceptable, empêchant ainsi toute action de sa part si la qualité de ses communications est supérieure à ce niveau. Il est en outre possible au gestionnaire de mobilité d'attribuer différentes valeurs de seuils de référence pour différents émetteurs/récepteurs mobiles, en fonction de l'environnement de chacun. En particulier, la valeur d'un seuil de référence pourra être ajustée en fonction du volume de communications en cours dans la zone géographique correspondante, et d'une qualité de service requise pour ces communications.

Dans un mode de réalisation particulier de l'invention, un émetteur/récepteur mobile inclus dans le système sera muni de moyens pour envoyer une requête, dite de basculement, au gestionnaire de mobilité aux fins d'entrer en communication avec un point d'accès voisin de son point d'accès courant, lorsqu'une mesure de qualité aura établi qu'une communication avec un tel point d'accès voisin serait de meilleure qualité que la communication avec le point d'accès courant.

Ce mode de réalisation offre à un émetteur/récepteur mobile plusieurs possibilités après qu'il ait effectué une surveillance de son environnement au travers de mesures de qualité.

Selon une première possibilité, l'émetteur/récepteur mobile sera apte à analyser lui-même les résultats de ces mesures et à identifier un point d'accès spécifique qui paraît pouvoir constituer un nouveau point d'accès courant optimal. L'émetteur/récepteur mobile sollicitera alors dans sa requête de basculement une autorisation à se rattacher à ce point d'accès spécifique.

Selon une deuxième possibilité, l'émetteur/récepteur mobile sera inapte à analyser lui-même les résultats des mesures de qualité qu'il aura effectuées. Il devra alors transmettre ces résultats au gestionnaire de mobilité, de préférence via la requête de basculement, et laisser au gestionnaire de mobilité le soin de les analyser, l'émetteur/récepteur se contentant ainsi de signaler au travers de ladite requête de basculement une nécessité de se voir attribuer un nouveau point d'accès.

La première possibilité tend à conférer une plus grande indépendance aux émetteurs/récepteurs mobiles, ce qui pourra permettre à un émetteur/récepteur mobile de pallier d'éventuelles déficiences du gestionnaire de mobilité, mais favorise des comportements anarchiques des émetteurs/récepteurs, avec les risques potentiels de saturation et de perte d'informations évoqués plus haut.

La deuxième possibilité offre au gestionnaire de mobilité une plus grande maîtrise du système, lequel gestionnaire sera alors avantageusement muni de moyens pour :
. analyser les résultats des mesures de qualité effectuées par un émetteur/récepteur mobile,
. déduire d'une telle analyse et des conditions de fonctionnement des points d'accès et des dispositifs d'interface une identité d'un point d'accès voisin spécifique avec lequel l'émetteur/récepteur devra entrer en communication, et
. transmettre audit émetteur/récepteur ladite identité.

Dans un mode de réalisation particulier de l'invention, un système de télécommunication tel que décrit plus haut pourra avantageusement inclure une base de données associée au gestionnaire de mobilité et destinée à contenir des informations relatives aux conditions de fonctionnement des points d'accès et des dispositifs d'interface avec lesquels le gestionnaire de mobilité est en liaison.

Ce mode de réalisation est avantageux en ce qu'il évite au gestionnaire de mobilité de stocker par lui-même un trop grand volume d'informations, relatif par exemple à des structures du système, qui sont en principe invariantes ou en tout cas sujettes à de très peu fréquentes variations, comme des modifications de câblage ou des ajouts ou suppressions de dispositifs d'interface et/ou de points d'accès. Le gestionnaire de mobilité pourra se contenter de gérer des informations dynamiques relatives aux conditions de fonctionnement instantanées du système, encore que ce type d'informations puisse aussi être stocké dans la base de données si elle est adaptée à cet effet. La base de données simplifie en outre les tâches de gestion dévolues au gestionnaire de mobilité en autorisant une collecte centralisée d'informations relatives aux conditions de fonctionnement du système.

Dans un autre mode de réalisation, on pourra prévoir d'insérer des dispositifs d'interface entre les points d'accès et le réseau de communication, chaque dispositif d'interface étant apte à communiquer avec un groupe prédéterminé de points d'accès.

Les dispositifs d'interface, par exemple des interfaces d'au moins un routeur d'accès dans le cadre de transmissions de données selon le protocole IP, permettent d'organiser localement les communications entre points d'accès ce qui diminue la charge de travail d'une infrastructure de gestion du réseau de communication et en particulier celle du gestionnaire de mobilité, qui pourra émettre des informations de mobilité vers les dispositifs d'interface en chargeant ceux-ci de répercuter lesdites informations sur les points d'accès.

Dans le but de simplifier encore la gestion du système en réduisant le nombre de trajets d'information possibles entre les émetteurs/récepteurs et les dispositifs d'interface, on pourra prévoir que chaque point d'accès ne soit apte à communiquer qu'avec un unique dispositif d'interface.

Dans le but de simplifier la réalisation physique du système selon l'invention en utilisant des ressources et/ou des sites géographiques pré-existants, on pourra en outre prévoir d'implanter le gestionnaire de mobilité au sein d'au moins un dispositif d'interface. Le gestionnaire de mobilité pourra en outre être fragmenté en sous-ensembles répartis dans différents dispositifs d'interface.

L'invention concerne également, en tant que moyen essentiel à sa mise en œuvre, un dispositif apte à remplir les fonctions d'un émetteur/récepteur inclus dans un système de télécommunication tel que décrit plus haut, par exemple un radiotéléphone, un organiseur ou un ordinateur portable muni de fonctionnalités d'émission/réception, ou encore un ensemble formé par un radiotéléphone et un organiseur ou un ordinateur portable aptes à communiquer entre eux.

L'invention concerne aussi, en tant que moyen essentiel à sa mise en œuvre, un dispositif apte à remplir les fonctions d'un gestionnaire de mobilité inclus dans un système de télécommunication tel que décrit plus haut, par exemple un serveur.

L'invention concerne aussi un procédé de transmission de données entre :
. au moins un émetteur/récepteur mobile,
. une pluralité de points d'accès, chacun desquels étant apte à communiquer avec l'émetteur/récepteur mobile lorsque ledit émetteur/récepteur est situé dans une zone de couverture dudit point d'accès, et
. un réseau de communication autorisant des communications entre lesdits points d'accès,
procédé caractérisé en ce qu'il inclut au moins une étape d'identification, en fonction de conditions de fonctionnement des points d'accès, d'un point d'accès spécifique avec lequel l'émetteur/récepteur mobile doit établir une communication.

Dans un de ses modes de mise en œuvre, un tel procédé pourra inclure une étape de mémorisation par l'émetteur/récepteur mobile, lorsqu'il est en communication avec un point d'accès appelé point d'accès courant, d'une liste de points d'accès voisins du point d'accès courant, laquelle liste lui étant transmise par le gestionnaire de mobilité.

Un tel procédé inclura avantageusement une étape de création d'une liste de point d'accès voisins par le gestionnaire de mobilité, laquelle liste est établie en fonction d'informations d'environnement propres à l'émetteur/récepteur mobile auquel ladite liste est destinée.

Les informations d'environnement propres à l'émetteur/récepteur mobile pourront entre autres être représentatives de profils conformes à la liste suivante :
. appartenance d'un utilisateur de l'émetteur/récepteur à un groupe d'utilisateurs prédéterminé, et autorisation d'accès à au moins un point d'accès prédéterminé accordée audit groupe,
. acquisition préalable par l'utilisateur d'autorisations de communiquer avec différents points d'accès liés à des réseaux de communication de natures différentes, ou
. localisation géographique d'un utilisateur de l'émetteur/récepteur dans une zone prédéterminée, et autorisation d'accès à au moins un point d'accès prédéterminé réservée pour ladite zone.

Dans un mode de mise en oeuvre avantageux de ce procédé, l'étape de mesure de qualité ne sera exécutée que lorsque la qualité de la communication entre l'émetteur/récepteur mobile et le point d'accès courant est inférieure à un seuil de référence prédéterminé.

Ce procédé pourra aussi inclure une étape de mémorisation par l'émetteur/récepteur mobile d'une valeur du seuil de référence après réception par ledit l'émetteur/récepteur de ladite valeur en provenance du gestionnaire de mobilité.

Dans un mode de mise en oeuvre particulier de l'invention, un procédé tel que décrit plus haut pourra de plus inclure une étape d'émission d'une requête de basculement par l'émetteur/récepteur mobile vers le gestionnaire de mobilité, aux fins de faire établir une communication dudit émetteur/récepteur avec un point d'accès voisin de son point d'accès courant, lorsqu'une mesure de qualité a établi qu'une communication avec un tel point d'accès voisin serait de meilleure qualité que la communication avec le point d'accès courant.

Dans un mode de mise en oeuvre préféré de ce procédé, l'étape d'identification pourra inclure, destinées à être exécutées par le gestionnaire de mobilité :
. une sous-étape d'analyse desdits résultats,
. une sous-étape de déduction d'une telle analyse et des conditions de fonctionnement des points d'accès d'une identité d'un point d'accès voisin spécifique avec lequel l'émetteur/récepteur devra entrer en communication, et
. une sous-étape de transmission audit émetteur/récepteur de ladite identité.

L'invention concerne enfin, en tant qu'élément utile à la mise en œuvre du procédé décrit plus haut, un signal destiné à être transmis par un émetteur/récepteur mobile vers un gestionnaire de mobilité et incluant au moins un résultat d'une mesure de qualité d'au moins une communication que ledit émetteur/récepteur mobile pourrait établir avec un point d'accès voisin de son point d'accès courant.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig.1 est un schéma fonctionnel décrivant un système de télécommunication selon un mode de mise en œuvre de l'invention,
la Fig.2 est un schéma fonctionnel décrivant le fonctionnement d'un tel système de télécommunication dans un premier cas de figure,
la Fig.3 est un schéma fonctionnel décrivant le fonctionnement d'un tel système de télécommunication dans un deuxième cas de figure,
la Fig.4 est un organigramme décrivant un procédé de transmission de données mis en œuvre dans un tel système,
la Fig.5 est une représentation schématique d'un signal formant une requête de basculement destinée à être émise par un émetteur/récepteur présent dans un tel système, et
la Fig.6 est une représentation schématique d'un signal destiné à être émis par un gestionnaire de mobilité en réponse à une telle requête de basculement.

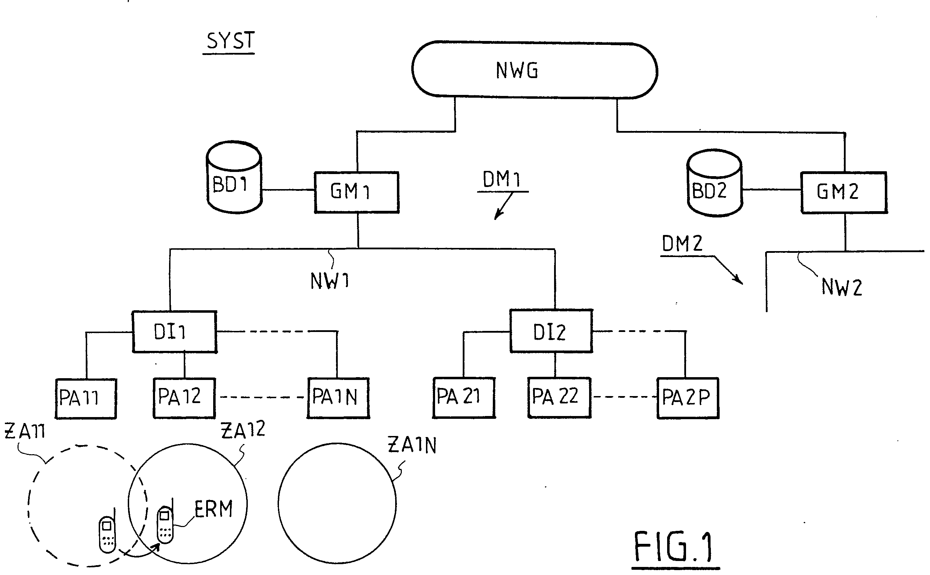

La Fig.1 représente schématiquement un système de télécommunication SYST, qui inclut :
. au moins un émetteur/récepteur mobile ERM, dans cet exemple un radiotéléphone,
. une pluralité de points d'accès PAli et PA2j (pour i=1 à N et j=1 à P), chacun desquels étant apte à communiquer avec l'émetteur/récepteur mobile ERM lorsque ledit émetteur/récepteur ERM est situé dans une zone de couverture ZA1i ou ZA2j dudit point d'accès PAli ou PA2j,
. au moins deux dispositifs d'interface DI1 et DI2, dont chacun est apte à communiquer, par exemple via une liaison de type Ethernet, avec un groupe prédéterminé de points d'accès PAli et PA2j, respectivement, lesquels points d'accès pourront être conformes à la norme IEEE 802.11, et
. un réseau de communication NW1 autorisant des communications entre lesdits dispositifs d'interface DI1 et DI2.

Un tel système pourra être utilisé pour opérer des transmissions de données entre l'émetteur/récepteur mobile ERM et un réseau de type Internet NWG ou un autre émetteur/récepteur mobile présent dans le système SYST. Les dispositifs d'interface DI1 et DI2 pourront être constitués par des interfaces de routeurs d'accès couramment utilisés dans les architectures de réseaux Internet, et communiquer entre eux via des liaisons de type Internet ou Ethernet.

Ces dispositifs d'interface DI1 et DI2 pourront également être constitués par des interfaces de passerelles d'accès à des réseaux de natures différentes, le dispositif d'interface DI1 pouvant par exemple être matérialisé par une passerelle d'accès à un réseau de radiotéléphonie mobile, et le dispositif d'interface DI2 pouvant être matérialisé par une passerelle d'accès à un réseau local.

Dans d'autres modes de réalisation de l'invention, de tels dispositifs d'interface pourront être absents, les points d'accès communiquant alors directement entre eux via un réseau de communication NW1, par exemple de type Ethernet.
Le système SYST selon le mode de réalisation de l'invention décrit ici inclut en outre un gestionnaire de mobilité GM1 apte à identifier, en fonction de conditions de fonctionnement des points d'accès PAli et PA2j (pour i=1 à N et j=1 à P), un point d'accès spécifique avec lequel l'émetteur/récepteur mobile ERM doit établir une communication.

Dans ce système de télécommunication SYST, lorsque, par exemple, l'émetteur/récepteur mobile ERM passe d'une zone de couverture ZA11 à une autre zone de couverture ZA12, le gestionnaire de mobilité GM1 est capable d'établir si un changement de point d'accès de l'émetteur/récepteur mobile ERM est opportun ou non, et quel point d'accès est le mieux adapté pour servir de nouveau point d'accès audit émetteur/récepteur ERM. Le contrôle ainsi exercé par le gestionnaire de mobilité GM1 limite les risques de saturation des points d'accès PAli et PA2j (pour i=1 à N et j=1 à P). Le gestionnaire de mobilité GM1 détermine si nécessaire un nouvel identifiant à attribuer à l'émetteur/récepteur mobile ERM lorsqu'il sera rattaché à son nouveau point d'accès, choisi par le gestionnaire de mobilité GM1, lequel gestionnaire peut alors remplacer, par exemple au sein de données en cours de transmission vers l'émetteur/récepteur ERM au moment du changement de point d'accès, l'ancien identifiant de l'émetteur/récepteur ERM par ledit nouvel identifiant, de sorte que ces données ne soient pas perdues comme dans les systèmes connus, mais puissent parvenir audit émetteur/récepteur ERM via son nouveau point d'accès PA12. Selon les protocoles IP existants, un tel changement d'identifiant a lieu par exemple lorsque l'ancien et le nouveau point d'accès courant dépendent de deux dispositifs d'interface différents.

Dans le mode de réalisation de l'invention représenté ici, le système de télécommunication SYST inclut une base de données BD1 associée au gestionnaire de mobilité GM1 et destinée à contenir des informations relatives aux conditions de fonctionnement des points d'accès PAli et PA2j (pour i=1 à N et j=1 à P) et des dispositifs d'interface DI1 et DI2 avec lesquels le gestionnaire de mobilité GM1 est en liaison. La présence de la base de données BD1 évite au gestionnaire de mobilité GM1 de stocker par lui-même un trop grand volume d'informations, relatif par exemple à des structures du système SYST, qui sont en principe invariantes ou en tout cas sujettes à de très peu fréquentes variations, comme des modifications de câblage ou des ajouts ou suppressions de dispositifs d'interface et/ou de points d'accès. Le gestionnaire de mobilité GM1 pourra se contenter de gérer des informations dynamiques relatives aux conditions de fonctionnement instantanées du système, encore que ce type d'informations puisse aussi être stocké dans la base de données BD1 si elle est adaptée à cet effet. La base de données BD1 simplifie en outre les tâches de gestion dévolues au gestionnaire de mobilité GM1 en autorisant une collecte centralisée d'informations relatives aux conditions de fonctionnement du système SYST.

Dans le but de simplifier encore la gestion du système SYST en réduisant le nombre de trajets d'information possibles entre un émetteur/récepteur ERM et un dispositif d'interface DI1 ou DI2, chaque point d'accès PAli ou PA2j (pour i=1 à N et j=1 à P) n'est, dans cet exemple, apte à communiquer qu'avec un unique dispositif d'interface DI1 ou DI2.

Le gestionnaire de mobilité GM1, les dispositifs d'interface DI1 et DI2 et les points d'accès PAli et PA2j (pour i=1 à N et j=1 à P) forment un premier domaine de mobilité DM1, dans lequel un émetteur/récepteur mobile ERM est susceptible d'évoluer. Un système de télécommunication SYST selon l'invention peut inclure, comme c'est le cas ici, un premier et un deuxième domaine de mobilité GM1 et GM2, respectivement, capables de communiquer entre eux via le réseau de communication NWG, chacun des gestionnaires de mobilité GM1 et GM2 étant muni d'une base de données BD1 et BD2 et contrôlant des dispositifs d'interface reliés entre eux par des réseaux NW1 et NW2. L'émetteur/récepteur pourra passer d'un domaine de mobilité à l'autre en quittant par exemple un point d'accès courant appartenant au premier domaine de mobilité DM1 et en se rattachant à un nouveau point d'accès appartenant au deuxième domaine de mobilité DM2. La procédure pour exécuter un tel changement de domaine sera semblable à celle utilisée selon l'invention pour exécuter un changement de point d'accès courant au sein d'un même domaine de mobilité, à ceci près que les données destinées à l'émetteur/récepteur mobile en cours de transmission au moment du changement de point d'accès devront être redirigées par le gestionnaire de mobilité du domaine auquel appartient l'ancien point d'accès courant vers le nouveau point d'accès courant, éventuellement via le gestionnaire de mobilité du domaine de mobilité auquel appartient ce nouveau point d'accès courant.

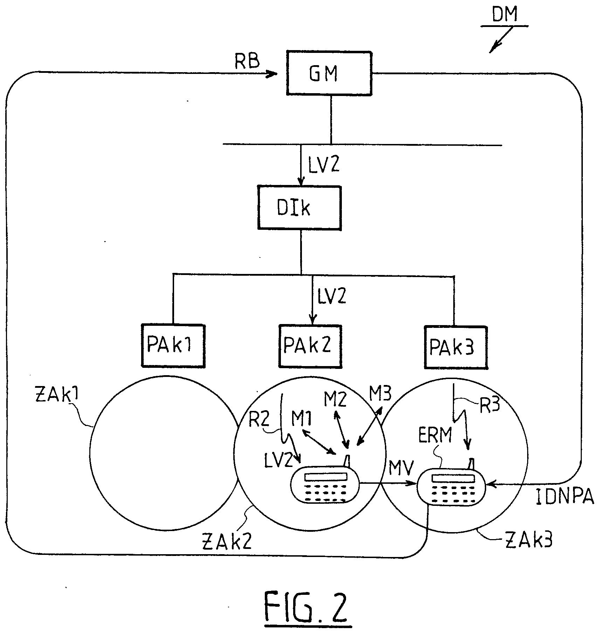

La Fig.2 représente plus spécifiquement un domaine de mobilité DM dans le but d'illustrer le fonctionnement du système de télécommunication selon l'invention. Ce domaine de mobilité DM comprend un gestionnaire de mobilité GM, une pluralité de dispositifs d'interface DIk (pour k=1 à M), dont un seul est représenté ici, et des premier, deuxième et troisième points d'accès PAk1, PAk2, PAk3 destinés à communiquer avec le dispositif d'interface DIk. A ces point d'accès correspondent respectivement des première, deuxième et troisième zones de couverture ZAk1, ZAk2 et ZAk3. Un émetteur/récepteur mobile ERM inclus dans le système, constitué dans cet exemple par un organiseur muni de fonctions d'émission/réception, est susceptible de se déplacer dans le domaine de mobilité DM. On admettra par hypothèse que l'émetteur/récepteur mobile ERM se trouve initialement dans la deuxième zone de couverture ZAk2 et est rattaché au deuxième point d'accès PAk2, ce qui signifie que l'émetteur/récepteur ERM a pour point d'accès courant ledit point d'accès PAk2. Le gestionnaire de mobilité GM fait alors parvenir à l'émetteur/récepteur mobile ERM, via le dispositif d'interface DIk et le point d'accès courant PAk2, une liste LV2 de points d'accès voisins dudit point d'accès courant PAk2. Cette liste LV2 peut être établie par le gestionnaire de mobilité en fonction de critères de proximité géographique, c'est-à-dire que les points d'accès dont les zones de couvertures sont adjacentes à la zone de couverture du point d'accès courant pourront y figurer. Cependant, si le gestionnaire de mobilité GM constate que certains de ces points d'accès sont déjà en situation de saturation, ou si leurs conditions de fonctionnement sont proches d'une telle situation, il pourra choisir de ne pas inclure de tels points d'accès dans la liste de points d'accès voisins à envoyer à l'émetteur/récepteur mobile ERM. Par ailleurs, le gestionnaire de mobilité GM peut savoir, de par sa connaissance générale des conditions de fonctionnement de tous les points d'accès et dispositifs d'interface inclus dans le domaine de mobilité DM, que d'autres points d'accès que ceux dont les zones de couvertures sont adjacentes à la zone de couverture du point d'accès courant pourraient, de part des propriétés particulières, comme par exemple une plus grande puissance d'émission ou une plus grande disponibilité, former des candidats acceptables pour un changement de point d'accès courant. Le gestionnaire de mobilité pourra inclure de tels points d'accès dans la liste de points d'accès voisins destinée à l'émetteur/récepteur mobile ERM.

La liste de points d'accès voisins LV2 ayant été transmise, par exemple via une liaison radio R2, par le point d'accès courant PAk2 à l'émetteur/récepteur mobile ERM, cette liste est mémorisée par celui-ci. Dans l'exemple décrit ici, on considèrera que la liste des points d'accès voisins LV2 inclut les points d'accès PAk1 et PAk3 dont les zones de couverture ZAk1 et ZAk3 sont adjacentes à la zone de couverture ZAk2 du point d'accès courant PAk2. L'émetteur/récepteur mobile ERM est muni de moyens de mesure pour effectuer des mesures de qualité M1, M3, de communications qu'il pourrait établir avec lesdits points d'accès voisins PAk1 et PAk3. Une telle mesure de qualité M1 ou M3 sera faite, dans l'exemple décrit ici, par émission d'un signal radioélectrique vers un point d'accès voisin PAk1 ou PAk3 et réception, contrôle d'intégrité et mesure d'un rapport signal sur bruit d'un signal émis en retour par ledit point d'accès voisin. Dans d'autres modes de réalisation possibles, l'émetteur/récepteur ERM pourra mesurer des rapports signal sur bruit de signaux spécifiques émis en continu à cet effet par les points d'accès PAk1, PAk2, PAk3.

Les mesures de qualité M1 et M3 permettent à l'émetteur/récepteur mobile ERM d'opérer une surveillance de son environnement. Une telle surveillance peut être faite en continu, ainsi qu'est faite usuellement par l'émetteur/récepteur mobile ERM une mesure de qualité M2 de la communication qu'il entretient avec son point d'accès courant PAk2, mais une surveillance continue risque de mobiliser inutilement des ressources essentielles au fonctionnement de l'émetteur/récepteur ERM, comme par exemple une batterie assurant son alimentation en énergie. Par ailleurs, des envois fréquents au gestionnaire de mobilité GM de rapports, dont chacun serait consécutif à une opération de surveillance, risquent de générer un volume de communications considérable qui risque de provoquer une saturation des points d'accès. Les moyens de mesure ne seront avantageusement activés que lorsque la qualité de la communication entre l'émetteur/récepteur mobile ERM et son point d'accès courant PAk2 devient inférieure à un seuil de référence prédéterminé. Ceci permet d'assurer que l'émetteur/récepteur mobile ERM ne déclenche une opération de surveillance que dans des situations où les résultats d'une telle opération ont de fortes chances d'être effectivement exploités, puisqu'une mauvaise qualité de la communication entre ledit émetteur/récepteur mobile ERM et son point d'accès courant PAk2 signale un risque d'interruption intempestive de ladite communication et devrait conduire à un changement de point d'accès courant. La valeur du seuil de référence pourra avoir été déterminée par le gestionnaire de mobilité GM et communiquée à l'émetteur/récepteur mobile ERM en même temps que la liste LV2 des points d'accès voisins. Ceci permet au gestionnaire de mobilité GM d'exercer un contrôle sur les opérations de surveillance de leur environnement qui sont menées par les émetteurs/récepteurs mobiles, puisque c'est le gestionnaire de mobilité GM qui détermine, au travers du choix de la valeur de seuil, le niveau de qualité de communication qu'un émetteur/récepteur mobile doit considérer comme étant acceptable, empêchant ainsi toute action de sa part si la qualité de ses communications est supérieure à ce niveau. Il est en outre possible au gestionnaire de mobilité GM d'attribuer différentes valeurs de seuils de référence à différents émetteurs/récepteurs mobiles, en fonction de l'environnement de chacun. En particulier, la valeur d'un seuil de référence pourra être ajustée en fonction du volume de communications en cours dans la zone géographique correspondante, et d'une qualité de service requise pour ces communications. Par exemple, la transmission d'un flux vidéo, muni d'une identification IP qui le définit comme tel, devra bénéficier d'une qualité justifiant un traitement prioritaire dudit flux par rapport à d'autres communications en cours dans la zone considérée, ce qui pourra amener le gestionnaire de mobilité GM à signifier à des émetteurs/récepteurs entretenant ces communications moins prioritaires avec le point d'accès correspondant de changer de point d'accès courant.

Dans l'exemple représenté ici, l'émetteur/récepteur mobile ERM accomplit un déplacement MV qui lui fait quitter la deuxième zone de couverture ZAk2, qui est la zone de couverture de son point d'accès courant PAk2, pour entrer dans la troisième zone de couverture ZAk3. Au cours de ce déplacement, la qualité de communication qu'il entretient avec son point d'accès courant PAk2, qu'il mesure en continu par une mesure M2, devient inférieure au seuil de référence prédéterminé. L'émetteur/récepteur mobile ERM effectue donc des mesures de qualité M1 et M3 de communications qu'il pourrait établir avec les points d'accès qui figurent sur la liste LV2 de points d'accès voisins qui lui a été envoyée par le gestionnaire de mobilité GM. L'émetteur/récepteur mobile ERM est muni de moyens pour envoyer une requête RB, dite de basculement, au gestionnaire de mobilité GM aux fins d'entrer en communication avec un point d'accès voisin de son point d'accès courant, lorsqu'une mesure de qualité a établi qu'une communication avec un tel point d'accès voisin serait de meilleure qualité que la communication avec le point d'accès courant. Dans une première variante du mode de réalisation de l'invention décrit ici, l'émetteur/récepteur mobile ERM sera apte à analyser lui-même les résultats de ces mesures de qualité M1, M3 et à identifier un point d'accès spécifique PAk1 ou PAk3 qui paraît pouvoir constituer un nouveau point d'accès courant optimal. L'émetteur/récepteur mobile ERM sollicitera alors dans sa requête de basculement RB une autorisation à se rattacher à ce point d'accès PAk1 ou PAk3 particulier, en le mentionnant spécifiquement comme meilleur choix pour le basculement demandé.

Dans une deuxième variante, l'émetteur/récepteur mobile ERM sera inapte à analyser lui-même les résultats des mesures de qualité M1, M3 qu'il aura effectuées. Il devra alors transmettre ces résultats au gestionnaire de mobilité GM, de préférence via la requête de basculement RB, et laisser audit gestionnaire de mobilité GM le soin d'analyser ces résultats, l'émetteur/récepteur ERM se contentant ainsi de signaler au travers de ladite requête de basculement RB une nécessité de se voir attribuer un nouveau point d'accès.

La première variante tend à conférer une plus grande indépendance aux émetteurs/récepteurs mobiles, ce qui pourra permettre à un émetteur/récepteur mobile ERM de pallier d'éventuelles déficiences du gestionnaire de mobilité GM, mais favorise des comportements anarchiques des émetteurs/récepteurs, avec les risques potentiels de saturation et de perte d'informations évoqués plus haut. En particulier, l'émetteur/récepteur peut avoir mémorisé une deuxième valeur de seuil, dite valeur critique, inférieure à la valeur du seuil de référence, et être muni de moyens pour se rattacher spontanément, lorsque la qualité de la communication en cours devient inférieure à cette valeur critique, au point d'accès que l'émetteur/récepteur mobile aura identifié comme meilleur nouveau point d'accès courant sur la base des mesures de qualités effectuées.

La deuxième variante offre au gestionnaire de mobilité GM une plus grande maîtrise du système. Il est néanmoins envisageable de laisser à l'émetteur/récepteur la possibilité, en cas de déficience du gestionnaire de mobilité et si la qualité de la communication qu'il entretient avec son point d'accès courant descend en dessous d'un second seuil en deçà duquel la communication sera quasi-certainement interrompue, de chercher à se rattacher à un point d'accès voisin de son point courant choisi de manière arbitraire dans la liste des points d'accès voisins, par exemple celui qui figure en premier sur ladite liste, de manière à laisser subsister une chance de ne pas laisser perdre des données transmises pendant la communication en cours.

Selon la deuxième variante, le gestionnaire GM est de préférence muni de moyens pour :
. analyser les résultats des mesures de qualité M1 et M3 effectuées par l'émetteur/récepteur mobile ERM,
. déduire d'une telle analyse et des conditions de fonctionnement des points d'accès PAk1, PAk2 et PAk3 et des dispositifs d'interface DIk une identité d'un point d'accès voisin avec lequel l'émetteur/récepteur devra entrer en communication, par exemple le troisième point d'accès PAk3 dans la zone de couverture ZAk3 duquel se trouve l'émetteur/récepteur mobile ERM, et
. transmettre audit émetteur/récepteur ERM l'identité dudit point d'accès PAk3 via un signal d'identification IDNPA.

Après avoir reçu le signal d'identification IDNPA, qui pourra par ailleurs inclure une nouvelle liste de points d'accès voisins de son nouveau point d'accès courant, l'émetteur/récepteur mobile ERM procèdera à une reconfiguration de ses moyens d'émission/réception, c'est-à-dire par exemple à une modification de fréquences porteuses des signaux qu'il est censé émettre et recevoir, afin d'entrer en contact avec son nouveau point d'accès courant PAk3 via une liaison radio R3 correspondante. Dans le premier cas de figure décrit ici, l'ancien point d'accès courant PAk2 et le nouveau point d'accès courant PAk3 dépendent d'un même dispositif d'interface DIk. Ceci implique, conformément aux protocoles IP connus, que ce changement de point d'accès courant n'entraînera pas de changement d'identifiant, c'est-à-dire d'adresse IP, pour l'émetteur/récepteur mobile ERM. La nouvelle liste de poins d'accès voisins pourra inclure, si par exemple le nouveau point d'accès est en bordure du domaine de mobilité DM, des points d'accès appartenant à un domaine de mobilité adjacent au domaine de mobilité DM.

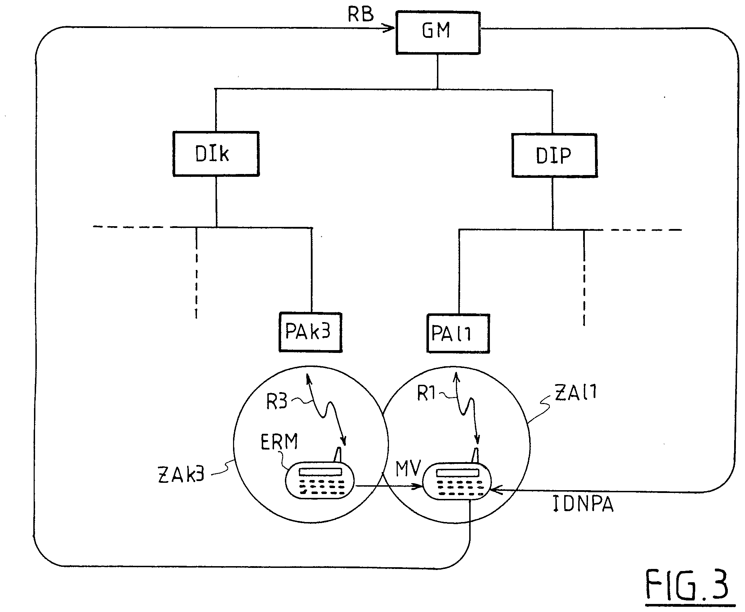

La Fig.3 illustre un changement de point d'accès courant dans le système décrit ci-dessus dans un deuxième cas de figure où l'émetteur/récepteur ERM subit un mouvement MV qui le conduit à quitter la zone de couverture ZAk3 d'un point d'accès courant donné PAk3 pour entrer dans une zone de couverture ZAl1 d'un nouveau point d'accès courant PAl1, lesquels point d'accès PAk3 et PAl1 dépendent de deux dispositifs d'interface distincts, DIk et DIl. Dans ce deuxième cas de figure, comme dans le précédent, l'émetteur/récepteur ERM sera amené à émettre vers le gestionnaire de mobilité GM une requête de basculement RB, en réponse à laquelle le gestionnaire de mobilité GM enverra audit émetteur/récepteur ERM un signal d'identification IDNPA qui contiendra, de manière implicite ou explicite, l'identité du nouveau point d'accès PAl1 et, dans ce deuxième cas de figure, un nouvel identifiant attribué à l'émetteur/récepteur mobile, puisque ce nouveau point d'accès PAl1 dépend d'un nouveau dispositif d'interface DIl. L'émetteur/récepteur mobile ERM procèdera alors à une reconfiguration de ses moyens d'émission/réception, c'est-à-dire par exemple à une modification de fréquences porteuses des signaux qu'il est censé émettre et recevoir, afin d'entrer en contact avec son nouveau point d'accès courant PAl1 via une liaison radio R1 correspondante, et accusera réception au gestionnaire de mobilité GM, via cette liaison radio R1, de son nouvel identifiant. Le gestionnaire de mobilité GM pourra alors, dans un mode de mise en œuvre avantageux de l'invention, intercepter tous les paquets de données en cours de transmission à destination de l'ancien identifiant de l'émetteur/récepteur ERM, et remplacer cet ancien identifiant par le nouvel identifiant dudit émetteur/récepteur ERM de manière à minimiser les pertes d'informations occasionnées par le changement de point d'accès courant de l'émetteur/récepteur ERM.

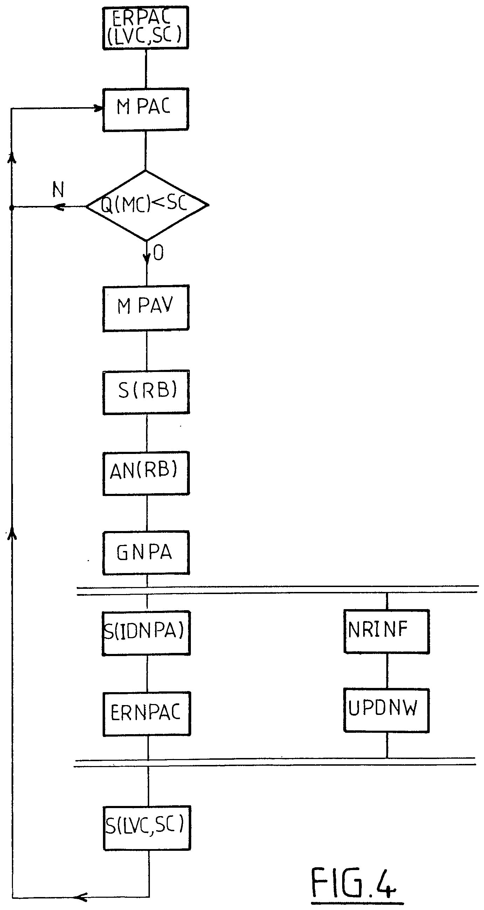

La Fig.4 est un organigramme qui illustre le déroulement d'un procédé de transmission de données selon un mode de mise en œuvre de l'invention. Dans une étape initiale ERPAC de ce procédé, un émetteur/récepteur mobile inclus dans un système de télécommunication tel que décrit plus haut est en communication avec un point d'accès appelé point d'accès courant. Ledit émetteur/récepteur a alors reçu depuis un gestionnaire de mobilité et mémorisé dans des moyens de mémorisation une liste LVC de points d'accès voisins dudit point d'accès courant, ainsi qu'une valeur de seuil de référence SC en deçà de laquelle la qualité de la communication que l'émetteur/récepteur entretient avec son point d'accès courant ne doit pas durablement se situer. Dans une étape suivante MPAC, l'émetteur/récepteur mesure la qualité de la communication qu'il entretient avec son point d'accès courant. Une étape suivante de test Q(MC)<SC détermine si la valeur de qualité mesurée pour cette communication est inférieure à la valeur du seuil de référence. Si l'étape de test Q(MC)<SC délivre un résultat négatif, l'émetteur/récepteur effectue une nouvelle mesure, dans une nouvelle étape MPAC, de la qualité de la communication qu'il entretient avec son point d'accès courant. Si l'étape de test Q(MC)<SC délivre un résultat positif, l'émetteur/récepteur effectue au cours d'une étape suivante MPAV, des mesures de qualité de communications qu'il pourrait établir avec les points d'accès présents sur la liste de points d'accès voisins qu'il a mémorisée. Au cours d'une étape suivante S(RB), l'émetteur/récepteur envoie au gestionnaire de mobilité une requête de basculement RB, puisque le résultat du test indique une nécessité de changer de point d'accès courant. La requête de basculement RB pourra de préférence inclure les résultats des mesures de qualité effectuées par l'émetteur/récepteur. Au cours d'une étape suivante AN(RB), le gestionnaire de mobilité analyse la requête de basculement RB, et éventuellement les résultats des mesures de qualité qu'elle inclut, en correspondance avec des données relatives aux conditions de fonctionnement des points d'accès et des dispositifs d'interface qui sont placés sous le contrôle dudit gestionnaire de mobilité, lequel en déduit, au cours d'une étape suivante GNPA, une identité de celui des points d'accès voisins qui présente les caractéristiques les plus avantageuses pour servir de nouveau point d'accès courant à l'émetteur/récepteur.

Dans ce mode particulier de mise en œuvre de l'invention, deux séries d'actions sont alors accomplies en parallèle :
Dans une première étape S(IDNPA) d'une première série d'actions, le gestionnaire de mobilité envoie à l'émetteur/récepteur l'identité du point d'accès qui doit devenir son nouveau point d'accès courant. Dans une étape suivante ERNPAC de cette première série d'actions, l'émetteur/récepteur accuse réception de cette identité en se rattachant au point d'accès désigné par le gestionnaire de mobilité comme devant constituer son nouveau point d'accès courant.

Dans une première étape NRINF d'une deuxième série d'actions, le gestionnaire de mobilité génère de nouvelles informations de routage, c'est-à-dire par exemple une nouvelle adresse de destination qui devra correspondre à l'émetteur/récepteur lorsqu'il sera rattaché au nouveau point d'accès courant dont le gestionnaire de mobilité a communiqué l'identité audit émetteur/récepteur. Cette nouvelle adresse formera un nouvel identifiant de l'émetteur/récepteur. Dans une étape suivante UPDNW de cette deuxième série d'actions, le gestionnaire de mobilité communique à tous les dispositifs d'interface et tous les points d'accès dont il a le contrôle le nouvel identifiant de l'émetteur/récepteur concerné, de manière à ce que des informations qui pourraient avoir été en cours de transmission vers ledit émetteur/récepteur avant son changement de point d'accès courant puissent être transmises audit émetteur/récepteur via son nouveau point d'accès courant. Dans une variante de cette étape UPDNW, le gestionnaire de mobilité pourra intercepter toutes les informations en cours de transmission ayant pour adresse de destination l'ancien identifiant de l'émetteur/récepteur concerné, et, d'une part, rediriger en leur attribuant pour adresse de destination le nouvel identifiant de l'émetteur/récepteur concerné, et, d'autre part, continuer à acheminer une copie desdites informations vers l'ancienne adresse pendant un intervalle de temps prédéterminé, ce qui permettra de réduire considérablement les risques pour que ces informations ne soient perdues du fait du changement de point d'accès courant.

Les première et deuxième séries d'actions décrites ci-dessus convergent vers une étape suivante S(LVC,SC), au cours de laquelle le gestionnaire de mobilité envoie à l'émetteur/récepteur, après avoir analysé les conditions de fonctionnement de l'ensemble des points d'accès et des dispositifs d'interface dont ledit gestionnaire de mobilité a le contrôle, une nouvelle valeur de seuil de référence SC et une nouvelle liste LVC de points d'accès voisins du nouveau point d'accès courant dudit émetteur/récepteur, lequel peut alors, au cours d'une étape suivante MPAC commencer à mesurer la qualité de la communication qu'il entretient avec son nouveau point d'accès.

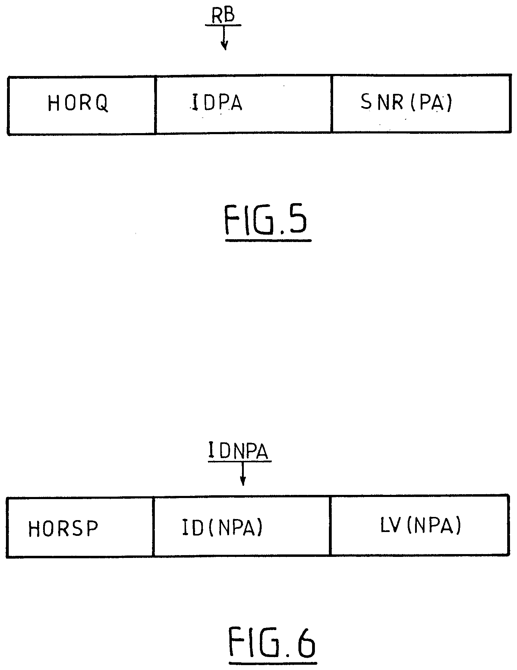

La Fig.5 représente schématiquement un signal qui peut constituer une requête de basculement RB selon un mode de mise en œuvre particulier de l'invention. Cette requête de basculement RB se présente sous forme d'un paquet d'informations incluant un premier champ HORQ destiné à identifier la nature du paquet, en l'occurrence une requête de la part d'un émetteur/récepteur aux fins de changer de point d'accès courant. La requête de basculement RB contient un deuxième champ IDPA contenant un identifiant d'un point d'accès voisin du point d'accès courant de l'émetteur/récepteur. La requête de basculement RB contient un troisième champ SNR(PA) contenant une valeur d'un rapport signal sur bruit qui constitue un résultat d'une mesure d'une communication que l'émetteur/récepteur pourrait établir avec le point d'accès voisin identifié dans le deuxième champ IDPA. La requête de basculement RB pourra contenir un nombre de couples de champs du type des deuxième et troisième champs inférieur ou égal au nombre de points d'accès présents dans la liste de points d'accès voisins que l'émetteur/récepteur aura reçue depuis le gestionnaire de mobilité.

La Fig.6 représente schématiquement une structure qui peut être attribuée à un signal d'identification IDNPA destiné à être envoyé par le gestionnaire de mobilité à un émetteur/récepteur en réponse à une requête de basculement RB émise par celui-ci. Ce signal d'identification IDNPA se présente sous forme d'un paquet d'informations incluant un premier champ HORSP destiné à identifier la nature du paquet, en l'occurrence une réponse à une requête de basculement. Le signal d'identification IDNPA contient un deuxième champ ID(NPA) contenant un identifiant du point d'accès sélectionné par le gestionnaire de mobilité pour constituer le nouveau point d'accès NPA de l'émetteur/récepteur qui a émis la requête de basculement. Cet identifiant peut être donné de manière explicite par le gestionnaire de mobilité, c'est-à-dire par exemple sous la forme d'une nouvelle adresse IP, ou de manière implicite, c'est-à-dire sous forme d'un ensemble de données permettant à l'émetteur/récepteur auquel le signal d'identification IDNPA est destiné de reconstruire sa nouvelle adresse IP. Le signal d'identification IDNPA contient dans cet exemple un troisième champ LV(NPA) représentatif d'une liste de points d'accès voisins du point d'accès défini dans le deuxième champ ID(NPA), de sorte que l'émetteur/récepteur soit en mesure de commencer immédiatement des opérations de surveillance de son nouvel environnement.

### ANNEXE

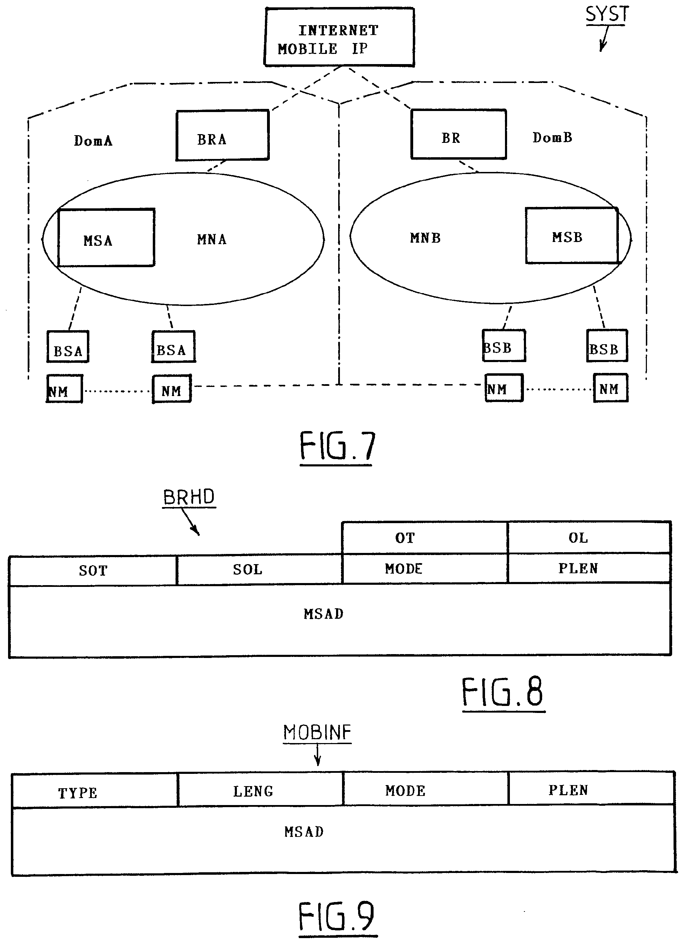

La description qui va suivre est un exemple spécifique d'application de l'invention dans lequel un système de télécommunication tel que décrit précédemment est destiné à opérer des transmissions de données conformément aux prescriptions générales d'un protocole Internet du type HMIPv6, qui signifie Hierarchical Mobile Internet Protocol version 6, disponible auprès de l'organisme "IETF Mobile IP Working Group". Cette description ne peut en aucun cas être restrictive de la portée des revendications énoncées ci-après, et doit être lue en correspondance avec les figures référencées Fig.7 à Fig.20.

Les Fig.7 à 12 illustrent des principes généraux sous-jacents au protocole HMIPv6 évoqué ci-dessus, et à un système de télécommunication utilisé pour implémenter un tel protocole.

La Fig.7 représente un tel système de télécommunication SYST, qui inclut un réseau Internet géré par un protocole de type Mobile IP, deux domaines de mobilité DomA et DomB, chacun muni d'au moins un routeur de bordure BRA ou BRB destiné chacun à relier un domaine au reste du réseau Internet et desservant un réseau de mobilité MNA ou MNB, par exemple du type LAN, incluant des serveurs de mobilité MSA ou MSB, chacun desquels formant un routeur du réseau de mobilité et étant destiné à communiquer avec un groupe de stations de base BSA ou BSB. Un nœud mobile NM, équivalent à un émetteur/récepteur mobile selon la description qui précède, est susceptible d'évoluer dans une zone géographique correspondant aux domaines de mobilité DomA et DomB. Les stations de base BSA et BSB forment ainsi des routeurs d'accès au nœud mobile NM.

Les Fig.8 à 12 décrivent sommairement des aspects essentiels du protocole HMIPv6.

La Fig.8 représente schématiquement un format que doit revêtir un en-tête option destination "requête d'association" BRHD d'un message d'information émis par un serveur de mobilité vers les routeurs d'accès de son domaine conformément au protocole HMIPv6. Un champ OT (acronyme de l'expression anglaise Option Type connue de l'homme du métier) d'une longueur de un octet, prend une valeur égale à 8 et indique ainsi que l'option est une option "requête d'association" (connue de l'homme du métier sous l'appellation anglaise Binding Request). Un champ OL (acronyme de l'expression anglaise Option Length connue de l'homme du métier) d'une longueur de un octet, prend une valeur égale à 20 et annonce ainsi la longueur de l'option en octets sans compter les deux premiers champs. Un champ SOT (acronyme de l'expression anglaise Sub-Option Type connue de l'homme du métier) d'une longueur de un octet, prend une valeur égale à 102 et indique ainsi qu'il s'agit ici d'une sous-option de type "Information de mobilité". Un champ SOL (acronyme de l'expression anglaise Sub-Option Length connue de l'homme du métier) d'une longueur de un octet, prend une valeur égale à 18 et annonce ainsi la longueur de la sous-option en octets sans compter les deux premiers champs. Un champ MODE d'une longueur de un octet identifie le protocole utilisé par le serveur de mobilité. Une valeur 0 correspondra au protocole Mobile IPv6, une valeur 1 au protocole HMIPv6 avec Mobile IPv6, et une valeur 2 au protocole HMIPv6 sans Mobile IPv6. Un champ PLEN d'une longueur de un octet identifie la longueur du préfixe réseau du réseau de mobilité. Enfin, une adresse MSAD (acronyme de l'expression anglaise Mobile Server ADdress connue de l'homme du métier) indique une adresse du serveur de mobilité.

La sous-option "Information de mobilité" contient donc l'adresse du serveur de mobilité ainsi que la longueur du préfixe réseau du réseau de mobilité. Les routeurs sollicités pourront alors sauvegarder ces paramètres afin de les diffuser dans leurs annonces de routeur grâce à une option ND6 appelée option d'information de mobilité.

La figure 9 décrit une structure MOBINF d'une option ND6 d'information de mobilité conforme au protocole HMIPv6, qui inclut dans cet exemple un champ TYPE, d'une longueur de un octet, qui prend une valeur égale à 100, un champ LENG, d'une longueur de un octet, qui prend une valeur égale à 20, un champ MODE, d'une longueur de un octet, qui identifie le protocole utilisé par le serveur de mobilité, une valeur 0 correspondant au protocole Mobile IPv6, une valeur 1 au protocole HMIpv6 avec Mobile IPv6, et une valeur 2 au protocole HMIPv6 sans Mobile IPv6, et un champ PLEN d'une longueur de un octet qui identifie la longueur du préfixe réseau du réseau de mobilité. Enfin, une adresse MSAD (acronyme de l'expression anglaise Mobile Server ADdress connue de l'homme du métier) indiquera une adresse du serveur de mobilité.

Lorsqu'un nœud mobile se déplace dans un nouveau domaine HMIPv6 et détecte l'annonce d'un nouveau routeur avec l'option d'information de mobilité, il acquiert deux nouvelles adresses temporaires. Une première adresse est valide dans le réseau de mobilité et est appelée adresse virtuelle VCOA (acronyme de l'expression anglaise Virtual Care-Of Address connue de l'homme du métier). Elle est déterminée en concaténant l'identifiant de l'interface du nœud mobile avec le préfixe réseau de mobilité recueilli dans l'annonce des routeurs. Une deuxième adresse identifie la liaison locale, et est obtenue en concaténant l'identifiant de l'interface du noeud mobile avec le préfixe réseau de la station de base courante et est appelée adresse locale LCOA (acronyme de l'expression anglaise Local Care-Of Address connue de l'homme du métier). L'adresse virtuelle VCOA joue le rôle d'adresse temporaire primaire. Le nœud mobile doit donc informer son agent mère (connu de l'homme du métier sous l'appellation anglaise Home Agent), ainsi que d'éventuels nœuds correspondants extérieurs au domaine, de cette adresse temporaire en utilisant des messages de mise à jour d'associations classiques du protocole Mobile IPv6. Ainsi, tous les paquets adressés au nœud mobile depuis l'extérieur du domaine seront routés vers son adresse VCOA dans le réseau de mobilité. Ensuite, le serveur de mobilité doit intercepter ces paquets et les livrer à l'adresse LCOA du nœud mobile. Cependant, pour que le serveur de mobilité soit capable de livrer ces paquets, il doit être informé de la correspondance des adresses LCOA et VCOA. Dès acquisition de ces deux adresses, le nœud mobile informe le réseau de mobilité de la correspondance (LCOA, VCOA) en lui transmettant un paquet de requête d'enregistrement HMIPv6. Cette requête d'enregistrement est un paquet IPv6 avec un nouvel en-tête option destination de "mise à jour de routage" (appelé en anglais Route Update)

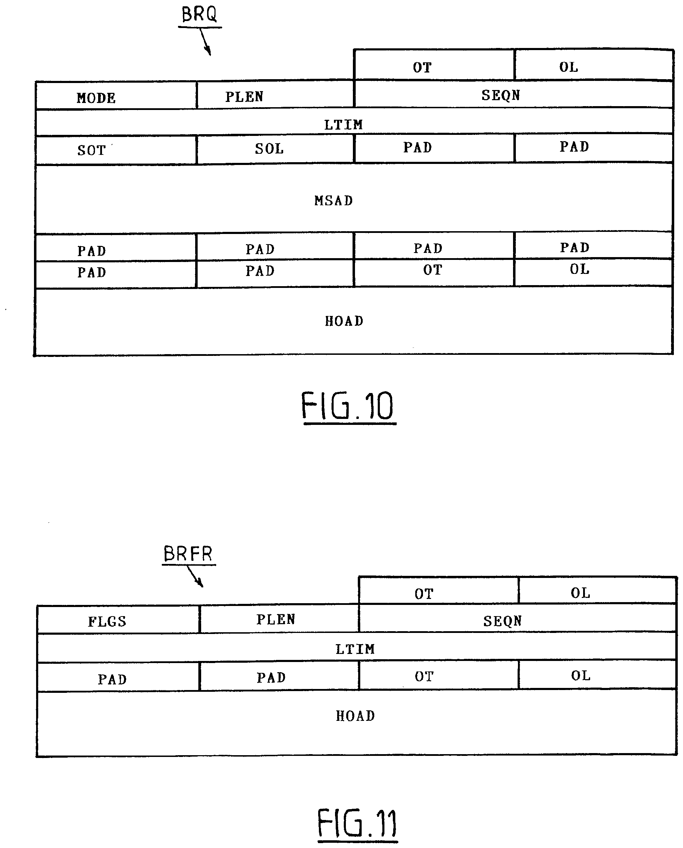

La Fig.10 représente un tel en-tête d'une requête d'enregistrement BRQ conforme au protocole HMIPv6. Cet en-tête inclut un champ OT d'une longueur de un octet, qui prend une valeur égale à 9 et indique ainsi que la requête constitue une mise à jour de routage. Un champ OL, d'une longueur de un octet, qui prend une valeur égale à 32 annonce la longueur de l'option en octets sans compter les deux premiers champs. Un champ MODE, d'une longueur de un octet identifie le protocole utilisé par le serveur de mobilité, une valeur 0 correspondant au protocole Mobile IPv6, une valeur 1 au protocole HMIPv6 avec Mobile IPv6, et une valeur 2 au protocole HMIPv6 sans Mobile IPv6. Un champ PLEN d'une longueur de un octet identifie la longueur du préfixe réseau du réseau de mobilité. Ce champ pourra être initialisé à zéro puisque le serveur de mobilité n'a pas besoin de cette information. Un champ SEQN (acronyme de l'expression anglaise SEQuence Number connue de l'homme du métier) d'une longueur de deux octets sera utilisé par le nœud receveur pour séquencer des messages de mise à jour, et par l'émetteur pour associer les messages de mise à jour avec leurs acquittements (connus de l'homme du métier sous l'appellation Binding Acknowledgments). Un champ LTIM (acronyme de l'expression anglaise LifeTIMe connue de l'homme du métier) d'une longueur de quatre octets indique le nombre de secondes restantes avant que l'action du dernier message de mise à jour n'expire. Un champ SOT, d'une longueur de un octet prend une valeur égale à 102 et indique ainsi qu'il s'agit ici d'une sous-option de type "Information de mobilité". Un champ SOL d'une longueur de un octet, prend une valeur égale à 22 et annonce ainsi la longueur de la sous-option en octets sans compter les deux premiers champs. Un champ MSAD, d'une longueur de seize octets, indique l'adresse de l'ancien serveur de mobilité. S'il s'agit de la première connexion au domaine HMIPv6, ce champ devra être initialisé à zéro. Un champ OT d'une longueur de un octet, prend une valeur égale à 201 annonçant une adresse mère (connue de l'homme du métier sous l'appellation anglaise Home Address). Un champ OL d'une longueur de un octet, prend une valeur égale à 16 et annonce ainsi la longueur de l'option en octets sans compter les deux premiers champs. Enfin, un champ HOAD identifie l'adresse mère du nœud mobile. La requête d'enregistrement BRQ contient en outre un certain nombre de champs de remplissage PAD de valeur nulle, destinés à ajuster la longueur du paquet d'informations constitué par ladite requête d'enregistrement BRQ à la longueur standard exigée par le protocole IPv6.

En ce qui concerne ses éventuels nœuds correspondants internes au domaine, le nœud mobile doit leur envoyer des messages de mise à jour d'associations (connues de l'homme du métier sous l'appellation anglaise Binding Updates) au format Mobile IPv6 avec son adresse LCOA comme adresse temporaire. Ainsi, les paquets adressés par ces nœuds au nœud mobile seront directement livrés à son adresse temporaire locale. Tant que le nœud mobile se déplace à l'intérieur du domaine visité, il conserve son adresse VCOA et acquiert uniquement une nouvelle adresse nLCOA associée à la nouvelle liaison locale. Le nœud mobile doit alors informer ses éventuels correspondants internes au domaine de sa nouvelle adresse nLCOA, toujours grâce à des rafraîchissements d'enregistrement au format Mobile IPv6.

La Fig.11 décrit la structure d'un paquet de rafraîchissement d'enregistrement BRFR conforme au protocole HMIPv6. Ce paquet comprend un champ OT d'une longueur de un octet, qui prend une valeur égale à 10 et indique ainsi que la requête constitue une mise à jour d'associations. Un champ OL d'une longueur de un octet prend une valeur égale à 8 pour annoncer la longueur de l'option en octets sans compter les deux premiers champs. Un champ FLGS, d'une longueur de un octet, contient un ensemble de drapeaux, et est initialisé à un pour indiquer qu'il s'agit d'une mise à jour. Un champ PLEN d'une longueur de un octet identifie la longueur du préfixe réseau du réseau de mobilité. Ce champ pourra être initialisé à zéro puisque le serveur de mobilité n'a pas besoin de cette information. Un champ SEQN d'une longueur de deux octets sera utilisé par le nœud receveur pour séquencer des messages de mise à jour, et par l'émetteur pour associer les messages de mise à jour avec les acquittements reçus en retour. Un champ LTIM d'une longueur de quatre octets indique le nombre de secondes restantes avant que l'action du dernier message de mise à jour n'expire. Un champ OT d'une longueur de un octet, prend une valeur égale à 201 annonçant une adresse mère. Un champ OL d'une longueur de un octet, prend une valeur égale à 16 et annonce ainsi la longueur de l'option en octets sans compter les deux premiers champs. Enfin, un champ HOAD identifie l'adresse mère du nœud mobile.

Lorsqu'un nœud mobile effectue un déplacement entre deux domaines HMIPv6, il change d'adresse temporaire primaire VCOA et les paquets en cours de transmission adressés à l'ancienne adresse VCOA seront perdus. Afin de limiter de telles pertes, le protocole HMIPv6 propose un nouveau type de basculement appelé basculement avec suivi (connu de l'homme du métier sous l'appellation anglaise Forward Handover). Le basculement glissant fonctionne comme suit : le nœud mobile émet une requête d'enregistrement HMIPv6 avec l'adresse de son ancien serveur de mobilité dans le champ MSAD. En recevant cette requête, le nouveau serveur de mobilité détecte le changement de domaine et adresse une requête de suivi à l'ancien serveur de mobilité spécifiant la nouvelle adresse VCOA. La requête de suivi est un message de type mise à jour d'associations tel que décrit ci-dessus, comportant un champ FLGS particulier.

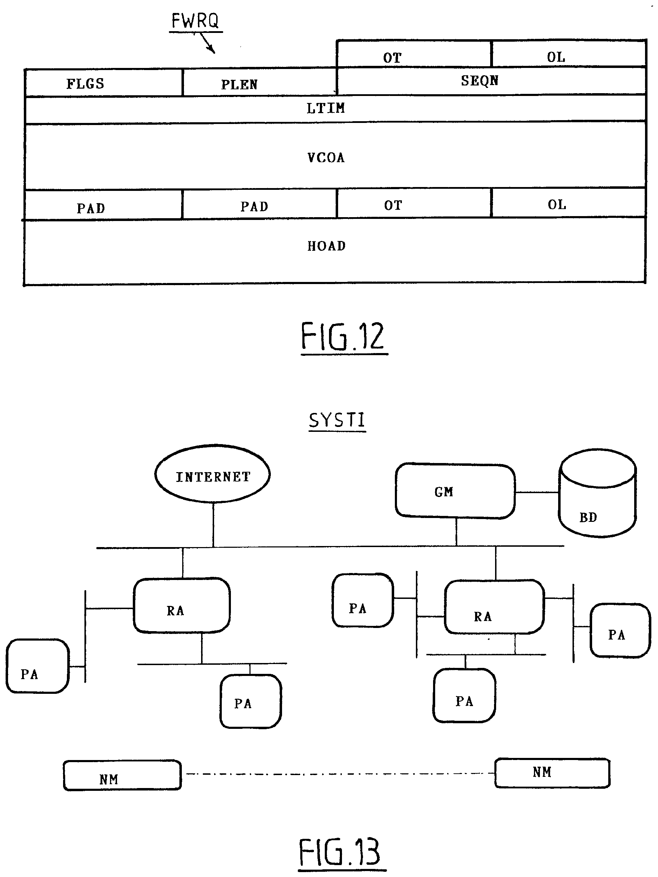

La Fig.12 décrit la structure d'une requête de suivi FWRQ conforme au protocole HMIPv6. Cette requête comprend un champ OT d'une longueur de un octet, qui prend une valeur égale à 198 et indique ainsi que la requête constitue un message de mise à jour d'associations d'un type particulier. Un champ OL d'une longueur de un octet prend une valeur égale à 24 pour annoncer la longueur de l'option en octets sans compter les deux premiers champs. Un champ FLGS, d'une longueur de un octet, est initialisé à 0x22 (0x02 pour indiquer qu'il s'agit d'une requête de suivi et 0x20 pour indiquer qu'il y a un champ comportant l'adresse VCOA du nœud mobile juste après le champ LTIM). Un champ PLEN d'une longueur de un octet identifie la longueur du préfixe réseau du réseau de mobilité. Ce champ sera initialisé à zéro lors de l'émission et ignoré lors de la réception. Un champ SEQN d'une longueur de deux octets sera utilisé par le nœud receveur pour séquencer les messages de mise à jour, et par l'émetteur pour associer les messages de mise à jour avec les acquittements reçus en retour. Le nœud mobile doit utiliser un nombre de séquence plus grand que le nombre de séquences utilisé dans le précédent message de mise à jour envoyé à la même destination. Un champ LTIM d'une longueur de quatre octets indique le nombre de secondes restantes avant que l'action du dernier message de mise à jour n'expire. Un champ VCOA d'une longueur de 16 octets contient la nouvelle adresse virtuelle nVCOA du nœud mobile. Un champ OT d'une longueur de un octet, prend une valeur égale à 201 annonçant une adresse mère. Un champ OL d'une longueur de un octet, prend une valeur égale à 16 et annonce ainsi la longueur de l'option en octets sans compter les deux premiers champs. Enfin, un champ HOAD identifie l'adresse mère du nœud mobile.

Ainsi, l'ancien serveur de mobilité, cible de la requête de suivi décrite ci-dessus, fait suivre les paquets destinés à l'ancienne adresse VCOA vers la nouvelle adresse VCOA, ce qui limite les pertes de paquets en cours de transmission lors du changement de domaine du nœud mobile. Lorsqu'un nœud mobile retourne à son réseau mère, il doit abandonner ces adresses temporaires et fonctionner sans agents de mobilité. De plus, pour éviter la pertes de paquets en cours de transmission lors du changement de domaine, le nœud mobile adresse une requête de suivi telle que décrite ci-dessus vers son dernier serveur de mobilité, afin que ce dernier puisse faire suivre à son adresse mère les paquets en cours de transmission.

La Fig.13 représente un système de télécommunication SYSTI, qui met en œuvre un protocole nouveau appelé par les inventeurs NCHMIPv6, ce qui signifie Network Controlled HMIPv6, lequel protocole exploite certaines ressources du protocole HMIPv6 décrit plus haut. Ce système SYSTI inclut un réseau Internet du type Mobile IP, des routeurs d'accès RA d'un nœud mobile NM au réseau IIv6. Des points d'accès PA assurent une liaison radio avec le nœud mobile NM. Un gestionnaire de mobilité GM joue un rôle essentiel dans un processus de prise de décision concernant des exécutions de changement de point d'accès par le nœud mobile, appelés basculement (ou Handover en anglais). Chaque routeur d'accès RA est associé à un gestionnaire de mobilité GM. Une base de données BD est associée au gestionnaire de mobilité GM, destinée à héberger des paramètres utiles à la gestion des basculements ainsi que des informations sur les points d'accès PA qui dépendent du gestionnaire de mobilité GM. Dans un domaine supportant le protocole NCHMIPv6 selon l'invention, chaque point d'accès PA s'associe avec une interface d'un routeur d'accès, dépend d'un gestionnaire de mobilité GM et possède un ensemble de points d'accès voisins. La liste des points d'accès voisins est maintenue dans la base de données BD associée au gestionnaire de mobilité GM, laquelle base de données GM maintient également des informations utiles pour l'assistance à la prise de décision concernant l'exécution de basculement. Un point d'accès est identifié par un identificateur unique (son nom de cellule ou son adresse d'attachement physique), le préfixe de l'interface de son routeur d'accès associé et la longueur de ce préfixe. Le gestionnaire de mobilité annonce son support du protocole NCHMIPv6 selon l'invention en diffusant périodiquement à ces routeurs d'accès un paquet d'informations semblable à celui du protocole HMIPv6, avec un champ supplémentaire MODE indiquant un mode "contrôle par le réseau". Dans l'implémentation prévue ici, une nouvelle valeur du champ MODE existant est définie à cet effet et initialisée à 3 pour identifie le mode de contrôle par le réseau. Lorsqu'un nœud mobile NM se déplace dans un nouveau domaine supportant le protocole NCHMIPv6 selon l'invention, il reçoit une annonce de routeurs de son routeur d'accès avec une option serveur de mobilité semblable à celle définie dans le protocole HMPIv6, incluant en outre un champ MODE "contrôle par le réseau". Le nœud mobile NM acquiert deux adresses temporaires semblables à celles décrites plus haut dans le cadre du protocole HMPIv6 : une adresse VCOA au niveau du gestionnaire de mobilité et une adresse LCOA sur sa liaison locale. Ensuite, le nœud mobile NM enregistre l'association (LCOA, VCOA) auprès de son gestionnaire de mobilité en émettant vers celui-ci une requête d'enregistrement au format HMIPv6 et enregistre l'association (VCOA, adresse mère) auprès de son agent mère (appelé en anglais Home Agent) et ses nœuds correspondants en utilisant des messages de mise à jour d'associations au format HMIPv6 tels que décrits plus haut. Si le gestionnaire de mobilité GM accepte la nouvelle association, il doit envoyer en retour au nœud mobile NM un acquittement d'association (appelé en anglais Binding Acknowledgement) positif et un message d'information contenant la liste des points d'accès voisins de son point d'accès courant. Le gestionnaire de mobilité GM identifie le point d'accès courant à travers son routeur d'accès. Cependant, si le réseau permet à deux points d'accès PA de se trouver sur un même brin Ethernet, le nœud mobile NM doit émettre dans sa requête d'enregistrement l'identité de son point d'accès courant, afin de permettre au gestionnaire de mobilité GM d'identifier le point d'accès auquel est associé le nœud mobile NM. Ceci est effectué au moyen d'un paquet d'informations formant une requête d'enregistrement semblable à celle décrite plus haut dans le cadre du protocole HMPIv6, incluant en outre une nouvelle sous-option appelée "information sur les points d'accès".

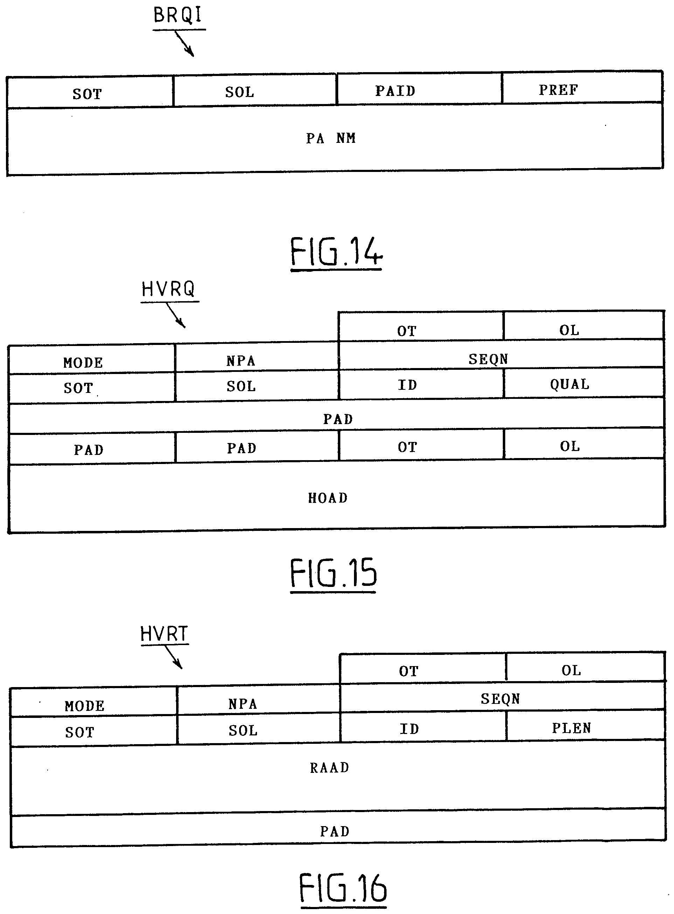

La Fig.14 représente schématiquement un format que peut revêtir un tel paquet d'informations BRQI. Un champ SOT, d'une longueur de un octet, est initialisé à 103 et indique ainsi qu'il s'agit ici de la nouvelle sous-option de type "Informations sur les points d'accès". Un champ SOL, d'une longueur de un octet, prend une valeur égale à 10 et annonce ainsi la longueur de la sous-option en octets sans compter les deux premiers champs. Un champ PAID, d'une longueur de un octet, contient un identifiant numérique du point d'accès attribué par le gestionnaire de mobilité. Une fois que le nœud mobile est informé de la correspondance (PAID, PANM), c'est cet identifiant numérique qui devra être utilisé entre le gestionnaire de mobilité et le nœud mobile pour spécifier le point d'accès correspondant. Cela permet de réduire la taille des paquets de mise à jour puisqu'un identifiant numérique (entre 1 et 128) nécessite un octet alors qu'un nom de 8 caractères nécessite 8 octets. Un champ PREF, d'une longueur de un octet, indique une préférence d'utilisation, d'un point de vue réseau, du point d'accès lorsque le nœud mobile est contraint à effectuer un basculement sans assistance de la part du réseau. Une valeur élevée de ce champ PREF indique que ce point d'accès constitue un choix préférentiel. Si, à l'inverse, un point d'accès possède un champ PREF de valeur nulle, le nœud mobile devra ignorer ce point d'accès et l'éliminer de sa liste s'il y figure déjà. Un champ PANM, d'une longueur de 8 octets, indique le nom de la cellule contrôlée par le point d'accès. Ce champ PANM représente le paramètre d'attachement physique au point d'accès, ou de la cellule gérée par ce point d'accès. Un nœud mobile qui connaît ce paramètre doit pouvoir se rattacher au point d'accès correspondant. Dans le mode de mise en œuvre de l'invention décrit ici, ce champ PANM correspond au nom de la cellule gérée par le point d'accès, mais il peut aussi représenter l'adresse physique de la carte liaison radio du point d'accès, l'adresse Ethernet du point d'accès, ou encore l'adresse Ethernet de l'interface du routeur d'accès associé.

Dans un domaine supportant le protocole NCHMIPv6 selon l'invention, un nœud mobile contrôle en continu la qualité de sa liaison radio avec son point d'accès courant. Si cette qualité descend au-dessous d'un seuil S1, le nœud mobile recueille les mesures de qualité de communications avec les points d'accès voisins de son point d'accès courant et envoie ces mesures à son gestionnaire de mobilité dans une requête de basculement. Le nœud mobile n'émet dans sa requête de basculement que les valeurs des mesures de qualité des liaisons avec les points d'accès voisins inclus dans sa liste de points d'accès ainsi que de sa liaison avec son point d'accès courant, la liste des points d'accès voisins pouvant avoir été mise à jour par des paquets du type "information sur les points d'accès" décrit ci-dessus, envoyés par le gestionnaire de mobilité dans un message d'acquittement de la requête d'enregistrement du nœud mobile. La limitation aux points d'accès inclus dans la liste des points d'accès voisins permet de limiter la taille de la requête de basculement grâce à une première sélection réalisée par le gestionnaire de mobilité. La requête de basculement est un paquet IPv6, incluant en outre une nouvelle option destination appelée "requête de basculement".

La Fig.15 représente schématiquement un format que peut revêtir un tel paquet d'informations HVRQ. Un champ OT, d'une longueur de un octet, prend une valeur égale à 11 et indique ainsi que la requête constitue une requête de basculement. Un champ OL, d'une longueur de un octet, annonce la longueur de l'option en octets sans compter les deux premiers champs, qui sera calculée comme étant égale à (12.N)+4.((N+1)modulo2), où N est le nombre de points d'accès annoncés Si le nombre de points d'accès est pair, on doit prévoir quatre octets de bourrage de valeur nulle, car une option destination doit toujours avoir une longueur multiple de 8 octets. Un champ MODE, d'une longueur de un octet, est initialisé à 3 pour indiquer un mode "contrôle par le réseau" dans ce mode de mise en œuvre de l'invention. Un champ NPA, d'une longueur de un octet, indique le nombre de points d'accès annoncés. Ce champ est utilisé à titre essentiellement indicatif, car le gestionnaire de mobilité n'a pas besoin de cette information. Un champ SEQN, d'une longueur de deux octets, sera utilisé par le nœud receveur pour séquencer des messages de mise à jour, et par l'émetteur pour associer les messages de mise à jour avec les acquittements reçus en retour. Un champ SOT, d'une longueur de un octet prend une valeur égale à 110 et indique ainsi qu'il s'agit ici d'une nouvelle sous-option de type "mesures d'un point d'accès". Un champ SOL d'une longueur de un octet, prend une valeur égale à 2 et annonce ainsi la longueur de la sous-option en octets sans compter les deux premiers champs. Un champ PAID, d'une longueur de un octet, contient l'identifiant numérique du point d'accès. Un champ QUAL, d'une longueur de un octet, contient une valeur de qualité, matérialisée par la valeur d'un rapport signal sur bruit mesuré pour la liaison radio entre le nœud mobile et le point d'accès. Un champ OT, d'une longueur de un octet, prend une valeur égale à 201 annonçant une adresse mère. Un champ OL, d'une longueur de un octet, prend une valeur égale à 16 et annonce ainsi la longueur de l'option en octets sans compter les deux premiers champs. Enfin, un champ HOAD identifie l'adresse mère du noeud mobile.

Le gestionnaire de mobilité consultera les mesures qui lui auront été ainsi transmises, et décidera à quel point d'accès voisin le nœud mobile devra se rattacher. Le gestionnaire de données peut maintenir dans sa base de données diverses informations qui peuvent l'aider dans sa prise de décision quant à l'exécution du basculement. Par exemple, s'il maintient des informations sur la charge courante de ses points d'accès, le gestionnaire de mobilité pourra faire d la répartition de charge. Le gestionnaire de mobilité enverra en retour une réponse à la requête de basculement, qui spécifiera un point d'accès élu qui devra constituer le nouveau point d'accès du nœud mobile. En parallèle, le gestionnaire de mobilité créera une nouvelle association (VCOA, nLCOA), nLCOA étant la future adresse du nœud mobile en association avec le point d'accès élu, ce qui permet de dupliquer des données en cours de transmission vers le nœud mobile afin de transmettre lesdites données simultanément vers l'ancien et le nouveau points d'accès courant. En effet, la nouvelle adresse peut être prédite puisqu'elle est construite à partir de la concaténation du préfixe réseau du nouveau routeur d'accès et de l'identifiant physique de l'interface du nœud mobile, construction parfois appelée configuration sans état. La réponse du gestionnaire de mobilité à une requête de basculement est un paquet IPv6, incluant en outre une nouvelle option destination appelée "réponse de basculement".

La Fig.16 représente schématiquement un format que peut revêtir un tel paquet d'informations HVRT. Un champ OT, d'une longueur de un octet, prend une valeur égale à 12 et indique ainsi que la requête constitue une réponse de basculement (en anglais Handover Response). Un champ OL, d'une longueur de un octet, annonce la longueur de l'option en octets sans compter les deux premiers champs, qui sera choisie égale à 28. Un champ MODE, d'une longueur de un octet, identifie le protocole utilisé par le gestionnaire de mobilité. Un champ NPA, d'une longueur de un octet, indique le nombre de points d'accès annoncés. Ce champ est utilisé à titre essentiellement indicatif, car le gestionnaire de mobilité n'a pas besoin de cette information. Un champ SEQN, d'une longueur de deux octets, sera utilisé par le nœud receveur pour séquencer des messages de mise à jour, et par l'émetteur pour associer les messages de mise à jour avec les acquittements reçus en retour. Un champ SOT, d'une longueur de un octet prend dans ce mode de mise en œuvre de l'invention une valeur égale à 114 et indique ainsi qu'il s'agit d'une nouvelle sous-option de type "point d'accès élu". Un champ SOL d'une longueur de un octet, prend une valeur égale à 22 et annonce ainsi la longueur de la sous-option en octets sans compter les deux premiers champs. Un champ ID, d'une longueur de un octet, contient l'identifiant du point d'accès élu. Un champ PLEN, d'une longueur de un octet, indique la longueur du préfixe routeur d'accès sur lequel est raccordé le point d'accès élu. Un champ RAAD, d'une longueur de seize octets, identifie l'adresse du routeur d'accès auquel est raccordé le point d'accès élu.

Le nœud mobile, après avoir reçu la réponse de basculement décrite ci-dessus, construira sa future adresse nLCOA en concaténant son identifiant d'interface physique avec le préfixe réseau de son futur réseau d'accès, et exécutera son basculement. Dès son rattachement au nouveau point d'accès, le nœud mobile devra émettre des annonces de voisins afin de faire connaître sa nouvelle correspondance (adresse IP nLCOA, adresse couche liaison). Le nœud mobile devra également émettre une sollicitation de routeurs pour recevoir l'annonce de routeurs de son nouveau routeur d'accès instantanément. Cela permet de diminuer la fréquence de diffusion des annonces de routeurs dans un réseau supportant le protocole NCHMIPv6 selon l'invention, et de limiter par conséquent la surcharge des liaisons radio. Dans le cas où le routeur a déjà une entrée pour le nœud mobile, ou bien des données à lui transmettre, le nouveau routeur d'accès reçoit l'annonce de voisins du nœud mobile avec la future adresse nLCOA, en suite de quoi le routeur met à jour sa table de routage en faisant correspondre l'adresse IP nLCOA avec l'adresse couche liaison du nœud mobile annoncée dans l'annonce de voisins, et la connexion vers le nœud mobile peut alors reprendre puisque les paquets destinés au nœud mobile auront déjà été redirigés par le gestionnaire de mobilité. A la réception de l'annonce de routeurs de son nouveau routeur d'accès, le nœud mobile complète et met à jour les paramètres de sa nouvelle adresse nLCOA, tels la durée de vie ou les drapeaux de configuration. Ensuite, le nœud mobile lance une temporisation pour déprécier puis invalider ses anciens préfixes et ses anciens routeurs par défaut. S'il le nœud mobile a effectué un mouvement intra-domaine, le nœud mobile émet une requête d'enregistrement à son gestionnaire de mobilité afin de mettre à jour son association (VCO, nLCOA), qui a été précédemment créée par la requête de basculement, ce qui permet d'interrompre la duplication des paquets de données et leur envoi vers l'ancien point d'accès. Si le nœud mobile a effectué un mouvement inter-domaines, le nœud mobile acquiert, en plus de sa nouvelle adresse physique nLCOA, une nouvelle adresse virtuelle nVCOA et l'enregistre auprès de son nouveau gestionnaire de mobilité et de ses nœuds correspondants en émettant vers eux respectivement une nouvelle requête d'enregistrement et des messages de mise à jour d'associations au format Mobile IP. Le nœud mobile doit aussi déprécier, puis invalider son ancienne adresse virtuelle. A la réception de cette requête, le nouveau gestionnaire de mobilité adresse un message de mise à jour d'associations particulier, constituant une requête de suivi conforme au protocole HMIPv6, à l'ancien gestionnaire de mobilité afin que ce dernier lui transmette les paquets destinés à l'ancienne adresse du nœud mobile. L'ancien gestionnaire de mobilité remplacera alors l'ancienne association (VCOA, nLCOA) par (VCOA, nVCOA). Chaque fois qu'un nœud mobile se déplace et change de point d'accès, il doit mettre à jour sa liste de points d'accès voisins. Il pourra le faire notamment grâce aux paquets d'informations sur les points d'accès diffusés par son gestionnaire de mobilité suite à un nouvel enregistrement. Si le gestionnaire de mobilité veut ajouter un nouveau point d'accès voisin, il doit utiliser la forme complète de l'option avec l'identifiant numérique, la préférence et le nom. Si le gestionnaire de mobilité veut supprimer un point d'accès de cette liste, il doit utiliser une forme réduite de l'option avec l'identifiant numérique du point d'accès à supprimer et une préférence initialisée à zéro. Si le gestionnaire de mobilité veut mettre à jour la préférence d'un point d'accès présent dans la liste des points d'accès voisins, il doit utiliser la forme réduite avec une nouvelle valeur de préférence. L'utilisation de la forme réduite par le gestionnaire de mobilité pour émettre des informations concernant des points d'accès déjà présents dans la liste des points d'accès voisins permet en effet de limiter la taille des paquets d'informations utilisés dans ce but.

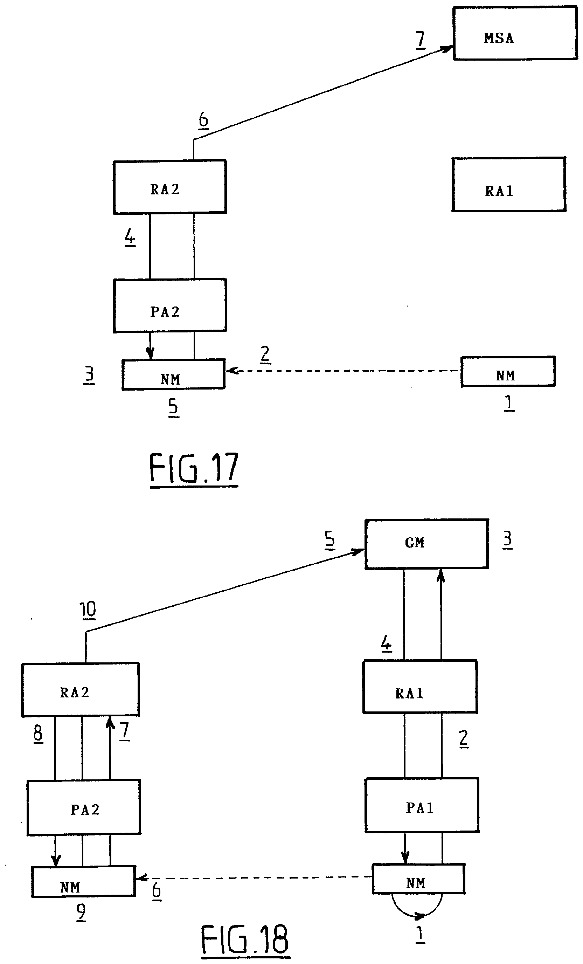

Les Fig.17 à 20 illustrent les différences entre des basculements effectués dans un système de transmission de données mettant en œuvre le protocole HMIPv6 connu et dans un système de transmission de données selon l'invention mettant en œuvre le nouveau protocole NCHMIPv6.

La Fig.17 représente un système de transmission mettant en œuvre le protocole HMIPv6, dans un cas de figure où un nœud mobile NM doit effectuer un basculement intra-domaine, c'est-à-dire au sein d'un même domaine de mobilité. Dans une étape 1, le nœud mobile NM constate une détérioration de la qualité de la communication qu'il entretient avec son point d'accès courant. Dans une étape 2, le nœud mobile NM procède à un basculement radio vers un nouveau point d'accès courant PA2. Dans une étape 3, le nœud mobile NM attend une annonce de routeurs non-sollicitée. Dans une étape 4, le nœud mobile NM reçoit une annonce de routeurs de la part d'un routeur d'accès RA2. Dans une étape 5, le nœud mobile acquiert une nouvelle adresse nLCOA. Dans une étape 6, le nœud mobile NM émet vers un serveur de mobilité MSA une requête d'enregistrement au format HMIPv6. Dans une étape 7, des paquets de données destinés au nœud mobile NM sont redirigés par ledit serveur de mobilité MSA vers l'adresse nLCOA.

La Fig.18 représente un système de transmission mettant en œuvre le protocole NCHMIPv6 conforme à l'invention, dans un cas de figure semblable où le nœud mobile NM doit effectuer un basculement intra-domaine. Dans une étape 1, le nœud mobile NM constate une détérioration de la qualité de la communication qu'il entretient avec son point d'accès courant PA1, rendue manifeste par le fait qu'une valeur mesurée de ladite qualité devient inférieure à une valeur de seuil S1. Dans une étape 2, le nœud mobile NM émet une requête de basculement vers le gestionnaire de mobilité GM dont dépendent le point d'accès courant PA1 et le routeur d'accès RA1 associé audit point d'accès courant. Dans une étape 3, le gestionnaire de mobilité GM choisit un routeur d'accès cible RA2. Dans une étape 4, le gestionnaire de mobilité GM envoie au nœud mobile NM une réponse à sa requête de basculement, qui contient une nouvelle adresse nLCOA. Dans une étape 5, le gestionnaire de mobilité GM redirige les paquets de données destinés au nœud mobile NM vers la nouvelle adresse nLCOA. Dans une étape 6, le nœud mobile NM acquiert sa nouvelle adresse nLCOA et exécute le basculement vers le point d'accès élu correspondant PA2. Dans une étape 7, le nœud mobile NM émet vers son nouveau routeur d'accès RA2 une annonce de voisins de nLCOA et une sollicitation d'annonce de routeurs. Dans une étape 8, le routeur d'accès RA2 émet vers le nœud mobile NM une annonce de routeurs. Dans une étape 9, le nœud mobile NM effectue une mise à jour de temps de validité et de nouveaux paramètres. Dans une étape 10, le nœud mobile NM émet vers le gestionnaire de mobilité GM une requête d'enregistrement au format HMIPv6.

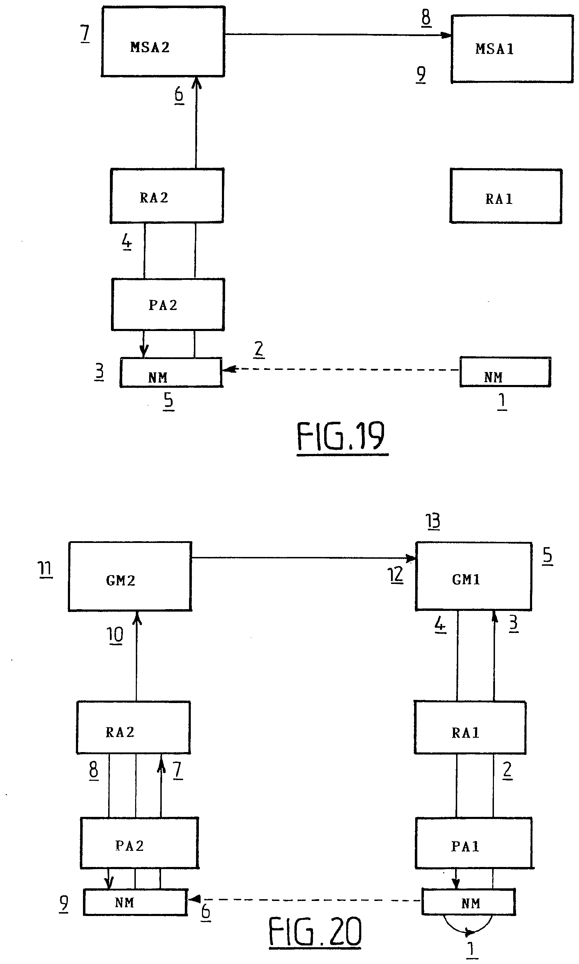

La Fig.19 représente un système de transmission mettant en œuvre le protocole HMIPv6, dans un cas de figure où un nœud mobile NM doit effectuer un basculement inter-domaines, c'est-à-dire depuis un premier domaine de mobilité géré par un premier serveur de mobilité MSA1 vers un deuxième domaine de mobilité géré par un deuxième serveur de mobilité MSA2. Dans une étape 1, le nœud mobile NM constate une détérioration de la qualité de la communication qu'il entretient avec son point d'accès courant, qui dépend du premier serveur de mobilité MSA1. Dans une étape 2, le nœud mobile NM procède à un basculement radio vers un nouveau point d'accès courant PA2, qui dépend du deuxième serveur de mobilité MSA2. Dans une étape 3, le nœud mobile NM attend une annonce de routeurs non-sollicitée. Dans une étape 4, le nœud mobile NM reçoit une annonce de routeurs de la part d'un routeur d'accès RA2. Dans une étape 5, le nœud mobile acquiert deux nouvelles adresses nLCOA et nVCOA. Dans une étape 6, le nœud mobile NM émet vers le deuxième serveur de mobilité MSA2 une requête d'enregistrement au format HMIPv6. Dans une étape 7, des paquets de données destinés au nœud mobile NM sont redirigés par le deuxième serveur de mobilité MSA2 vers l'adresse nLCOA. Dans une étape 8, le deuxième serveur de mobilité MSA2 émet une requête de suivi en direction du premier serveur de mobilité MSA1. Dans une étape 9, des paquets de données destinés au nœud mobile NM sont redirigés par le premier serveur de mobilité MSA1 vers l'adresse nVCOA.

La Fig.20 représente un système de transmission mettant en œuvre le protocole NCHMIPv6 conforme à l'invention, dans un cas de figure semblable où le nœud mobile NM doit effectuer un basculement inter-domaines. Dans une étape 1, le nœud mobile NM constate une détérioration de la qualité de la communication qu'il entretient avec son point d'accès courant PA1, rendue manifeste par le fait qu'une valeur mesurée de ladite qualité devient inférieure à une valeur de seuil S1. Dans une étape 2, le nœud mobile NM émet une requête de basculement vers un premier gestionnaire de mobilité GM1 dont dépendent le point d'accès courant PA1 et le routeur d'accès RA1 associé audit point d'accès courant. Dans une étape 3, le premier gestionnaire de mobilité GM1 choisit un routeur d'accès cible RA2. Dans une étape 4, le premier gestionnaire de mobilité GM1 envoie au nœud mobile NM une réponse à sa requête de basculement, qui contient une nouvelle adresse nLCOA. Dans une étape 5, le premier gestionnaire de mobilité GM1 redirige les paquets de données destinés au nœud mobile NM vers la nouvelle adresse nLCOA. Dans une étape 6, le nœud mobile NM construit sa nouvelle adresse nLCOA et exécute le basculement vers le point d'accès élu PA2 correspondant. Dans une étape 7, le nœud mobile NM émet vers son nouveau routeur d'accès RA2 une annonce de voisins de nLCOA et une sollicitation d'annonce de routeurs. Dans une étape 8, le routeur d'accès RA2 émet vers le nœud mobile NM une annonce de routeurs. Dans une étape 9, le nœud mobile NM acquiert une nouvelle adresse nVCOA. Dans une étape 10, le nœud mobile NM émet vers le deuxième gestionnaire de mobilité GM2 dont dépendent le nouveau point d'accès courant PA2 et le routeur d'accès RA2 associé audit nouveau point d'accès courant une requête d'enregistrement au format HMIPv6. Dans une étape 11, des paquets de données destinés au nœud mobile NM sont redirigés par le deuxième gestionnaire de mobilité GM2 vers l'adresse nLCOA. Dans une étape 12, le deuxième gestionnaire de mobilité GM2 émet une requête de suivi en direction du premier gestionnaire de mobilité GM1. Dans une étape 13, des paquets de données destinés au nœud mobile NM sont redirigés par le premier gestionnaire de mobilité GM1 vers l'adresse nVCOA.

La suite de cette annexe décrit diverses variantes des modes de mise en œuvre de l'invention décrits plus haut :
Conformément aux explications qui précèdent, un nœud mobile qui détecte une détérioration de la qualité de sa liaison radio en constatant qu'une mesure de ladite qualité devient inférieure à une première valeur de seuil S1 initie une requête de basculement et doit en principe continuer à retransmettre ladite requête jusqu'à recevoir en retour une réponse de la part du gestionnaire de mobilité. Selon une variante de l'invention, si la mesure de qualité devient inférieure à une deuxième valeur de seuil S2, ou si le nombre de requêtes de basculement émises sans recevoir de réponse dépasse une valeur limite, le nœud mobile pourra décider et exécuter par lui-même un basculement sans assistance en choisissant une cellule associée à un point d'accès voisin de son point d'accès courant offrant la meilleure qualité de communication et en tenant compte des préférences des points d'accès.

La première valeur de seuil S1 peut en outre être configurable par le gestionnaire de mobilité selon la particularité de la cellule contrôlée par le point d'accès courant et la nature du flux de données transporté, identifiée grâce à un champ appelé "label de flux" (de l'anglais Flow Label) de l'en-tête IPv6. En effet, le gestionnaire de mobilité peut à tout moment adresser un message de mise à jour appelé "seuil de contrôle" comportant une valeur de seuil à utiliser pour le contrôle de la qualité de la liaison radio en cours. Ce message de mise à jour sera un paquet Ipv6 incluant une nouvelle sous-option appelée "seuil de contrôle", et inclura par exemple un premier champ OT appelé contrôle de seuil (de l'anglais Control Threshold) d'une longueur de un octet, qui indiquera que le seuil de contrôle est destiné à être configuré par le gestionnaire de mobilité, auquel sera attribuée une valeur égale à 13, un deuxième champ OL, d'une longueur de un octet, auquel sera attribuée une valeur égale à 2, qui annoncera la longueur de l'option en octets sans compter les deux premiers champs, et un troisième champ THRESHOLD, d'une longueur de deux octets, qui déterminera la valeur du seuil de contrôle choisie par le gestionnaire de mobilité. Si la valeur de ce troisième champ THRESHOLD est nulle, le nœud mobile devra immédiatement déclencher une procédure de basculement.

Ainsi, si le flux de données en cours de transmission est d'une nature telle qu'il risque de ne pas supporter les conséquences d'un basculement, le gestionnaire de mobilité choisira pour la première valeur de seuil une valeur relativement faible afin de retarder l'exécution d'un basculement. *A contrario,* si le flux de données en cours de transmission est d'une nature telle qu'il requiert une grande qualité de service au niveau de la liaison radio, le gestionnaire de mobilité choisira pour la première valeur de seuil une valeur relativement élevée.

Une comparaison du mode de mise en œuvre de l'invention décrit ci-dessus avec le protocole HMIPv6 connu met à jour les différences essentielles suivantes :
Dans le protocole HMIPv6 connu, un nœud mobile subit le basculement de la carte radio. Dans le protocole selon l'invention, le nœud mobile contrôle la qualité de la liaison radio qu'il entretient avec son point d'accès courant. Si une mesure de cette qualité devient inférieure à un seuil donné, le nœud mobile recueille des mesures de qualité de liaisons radio qu'il pourrait établir avec des points d'accès voisins de son point d'accès courant et livre ces mesures au gestionnaire de mobilité, par exemple dans une requête de basculement. Dans le protocole selon l'invention, le nœud mobile maintient ainsi une liste de points d'accès voisins de son point d'accès courant, qui est mise à jour, à l'occasion de chaque basculement, grâce à des messages d'information sur les points d'accès voisins diffusés par le gestionnaire de mobilité.

Par ailleurs, en ce qui concerne le gestionnaire de mobilité, il est à noter qu'en plus de remplir les fonctions d'un serveur de mobilité conforme au protocole HMIPv6 connu, un gestionnaire de mobilité conforme au protocole NCHMIPv6 selon l'invention doit contrôler la procédure de décision d'exécution d'un basculement par les nœuds mobiles qui dépendent dudit gestionnaire de mobilité. A chaque fois qu'il reçoit une requête de basculement de la part d'un de ces nœuds mobiles, le gestionnaire de mobilité analyse les résultats de mesure de qualité recueillis par ledit nœud mobile, consulte la base de données qui lui est associée et identifie un point d'accès élu auquel le nœud mobile doit se rattacher. Le gestionnaire de mobilité doit ensuite adresser une réponse à la requête de basculement au nœud mobile qui l'a émise, anticiper la future adresse dudit nœud mobile, et dupliquer et rediriger les paquets en cours de transmission simultanément vers l'ancienne et vers la nouvelle adresse dudit nœud mobile. Enfin, à chaque fois qu'un gestionnaire de mobilité accepte une requête d'enregistrement conforme au protocole NCHMIPv6 selon l'invention en provenance d'un nœud mobile, le gestionnaire de mobilité doit adresser en retour audit nœud mobile un paquet d'informations concernant les points d'accès voisins au nouveau point d'accès courant qu'il aura choisi pour ce nœud mobile, afin de lui permettre de mettre à jour sa liste de points d'accès voisins.

Ainsi que précédemment exposé, l'invention pourra être mise en œuvre pour gérer des accès sélectifs d'émetteurs/récepteurs mobiles ou nœuds mobiles à différents points d'accès, par exemple des points d'accès relatifs à différents étages d'un ou plusieurs immeubles hébergeant le personnel d'une entreprise.

Chaque point d'accès pourra ainsi être muni d'un unique identifiant matérialisé par un SSID (abréviation de l'expression anglaise Service Set IDentifier connue de l'homme du métier et définie dans une norme IEE 802.11) inscrit dans le champ PANM tel que décrit par la Fig.14.

Le gestionnaire de mobilité sera apte à reconnaître de tels identifiants et à associer à chacun d'entre eux une information de localisation géographique qui peut appartenir à l'une des catégories suivantes :
. adresse,
. référence d'un immeuble, ou
. étage d'un immeuble.

Dans une variante de ce mode de mise en œuvre de l'invention, les identifiants seront classés selon les catégories décrites ci-dessus dans une base de données prévue à cet effet.

Le gestionnaire de mobilité sera en outre apte à reconnaître les profils des émetteurs/récepteurs mobiles qu'il est destiné à gérer. Un profil peut restreindre l'autorisation d'accès d'un émetteur/récepteur mobile donné à certains points d'accès prédéterminés :
Ainsi, par exemple, un premier émetteur/récepteur mobile muni d'une première adresse IP1 (inscrite dans un champ HOAD qui identifie l'adresse mère dudit émetteur/récepteur mobile conformément à la description de la Fig.10) sera muni d'autorisations l'autorisant à se connecter à des points d'accès associés à un deuxième étage d'un premier immeuble prédéterminé et à un troisième étage d'un deuxième immeuble prédéterminé. Un deuxième émetteur/récepteur mobile muni d'une deuxième adresse IP2 sera muni d'autorisations l'autorisant à se connecter à des points d'accès associés à un troisième étage du premier immeuble prédéterminé, et d'une manière plus générale, un Nème émetteur/récepteur mobile muni d'une deuxième adresse IPN sera muni d'autorisations l'autorisant à se connecter à des points d'accès associés à des étages X et Y d'immeubles W et Z prédéterminés.

Les différentes informations décrites ci-dessus (identifiants de points d'accès et informations de localisation des points d'accès) seront avantageusement enregistrées dans la base de données du gestionnaire de mobilité.

Un émetteur/récepteur mobile s'enregistrera auprès du gestionnaire de mobilité via un point d'accès courant en émettant une requête d'enregistrement telle que décrite précédemment, ladite requête incluant notamment une adresse mère de l'émetteur/récepteur mobile. Le gestionnaire de mobilité identifiera alors ledit émetteur/récepteur mobile et retrouvera le profil correspondant dans sa base de données. Le gestionnaire de mobilité en déduira les points d'accès autorisés pour cet émetteur/récepteur mobile, par exemple ceux situés à un étage donné d'un immeuble prédéterminé, et, en association avec une information de localisation courante (connue via l'identification du point d'accès courant, obtenu au moment de la requête), le gestionnaire de mobilité établira une liste de points d'accès qui sont situés à proximité de l'émetteur/récepteur mobile.

Pour illustrer un tel processus par un exemple simple, en réponse à une requête émise par un émetteur/récepteur mobile situé dans un immeuble donné, laquelle requête comprendra l'adresse IP dudit émetteur/récepteur mobile et un identifiant du point d'accès utilisé, dans cet exemple un point d'accès appartenant audit immeuble, le gestionnaire de mobilité établira une liste d'identifiants de points d'accès associés à un ou plusieurs étages dudit immeuble.

Le gestionnaire de mobilité transmettra ensuite à l'émetteur/récepteur mobile ladite liste qui permettra à l'émetteur/récepteur mobile d'identifier les points d'accès auxquels il pourrait être autorisé à se raccorder.

Dans des cas où plusieurs points d'accès possèdent un même identifiant, l'émetteur/récepteur mobile pourra sélectionner l'un de ces points d'accès en fonction de critères supplémentaires, par exemple un critère lié à une qualité de communication offerte par les différents points d'accès.

Les informations transmises par le gestionnaire de mobilité aux émetteurs/récepteurs mobiles pourront désigner des points d'accès appartenant à des réseaux de technologies différentes, comme par exemple des réseaux de radiotéléphonie de deuxième génération de type GSM, des réseaux de radiotéléphonie de troisième génération de type UMTS, des réseaux locaux sans fil de type WLAN 802.11 ou encore des réseaux de type GPRS. A cet effet, la liste des points d'accès autorisés pourra contenir, outre un premier champ incluant un identifiant de chaque point d'accès donné inclus dans la liste, un deuxième champ incluant un identifiant du type de réseau de communication auquel est associé ledit point d'accès donné.

Conformément à la description qui précède, l'émetteur/récepteur mobile sera alors apte à effectuer des mesures de qualité des communications qu'il pourrait établir avec les points d'accès autorisés identifiés au moyen de la liste décrite ci-dessus.

## Revendications

1. Système de télécommunication (SYST) incluant :
- au moins un émetteur/récepteur mobile (ERM),
- une pluralité de points d'accès (PA), chacun desquels étant apte à communiquer avec l'émetteur/récepteur mobile lorsque ledit émetteur/récepteur est situé dans une zone de couverture (ZA) dudit point d'accès, et
- un réseau de communication (NW) autorisant des communications entre lesdits points d'accès,
- un gestionnaire de mobilité (GM) apte à identifier, en fonction de conditions de fonctionnement des points d'accès, un point d'accès spécifique avec lequel l'émetteur/récepteur mobile doit établir une communication, l'émetteur/récepteur mobile étant muni de moyens de mesure pour effectuer au moins une mesure de qualité (M) d'une communication qu'il pourrait établir avec au moins un point d'accès voisin d'un point d'accès courant avec lequel ledit émetteur/récepteur mobile est en communication,
**caractérisé en ce que** les moyens de mesure sont aptes à n'être activés que lorsque la qualité de la communication entre l'émetteur/récepteur mobile et le point d'accès courant est inférieure à un seuil de référence prédéterminé.

2. Système de télécommunication selon la revendication 1, **caractérisé en ce que** l'émetteur/récepteur mobile est muni de moyens de mémorisation destinés à mémoriser une valeur du seuil de référence après réception par l'émetteur/récepteur mobile de ladite valeur en provenance du gestionnaire de mobilité.

3. Système de télécommunication selon l'une des revendications 1 ou 2, **caractérisé en ce que** l'émetteur/récepteur mobile est muni de moyens de mémorisation -destinés à mémoriser, lorsqu'il est en communication avec le point d'accès courant, une liste de points d'accès voisins du point d'accès courant, laquelle liste lui ayant été transmise par le gestionnaire de mobilité.

4. Système de télécommunication selon l'une des revendications 1 à 3, **caractérisé en ce que** l'émetteur/récepteur mobile est muni de moyens pour envoyer une requête, dite de basculement, au gestionnaire de mobilité aux fins d'entrer en communication avec un point d'accès voisin de son point d'accès courant, lorsqu'une mesure de qualité a établi qu'une communication avec un tel point d'accès voisin serait de meilleure qualité que la communication avec le point d'accès courant.

5. Système de télécommunication selon la revendication 4, **caractérisé en ce que**, la requête de basculement incluant des résultats de mesures de qualité effectuées par l'émetteur/récepteur mobile, le gestionnaire de mobilité est muni de moyens pour :
- analyser lesdits résultats,
- déduire d'une telle analyse et des conditions de fonctionnement des points d'accès une identité d'un point d'accès voisin spécifique avec lequel l'émetteur/récepteur devra entrer en communication, et
- transmettre audit émetteur/récepteur ladite identité.

6. Système de télécommunication selon l'une des revendications 1 à 5, **caractérisé en ce qu'**il inclut en outre une base de données associée au gestionnaire de mobilité et destinée à contenir des informations relatives aux conditions de fonctionnement des points d'accès.

7. Système de télécommunication selon l'une des revendications 1 à 6, **caractérisé en ce qu'**il inclut en outre au moins deux dispositifs d'interface entre les points d'accès et le réseau de communication, chaque dispositif d'interface étant apte communiquer avec un groupe prédéterminé de points d'accès.

8. Système de télécommunication selon la revendication 7, **caractérisé en ce que** chaque point d'accès n'est apte à communiquer qu'avec un unique dispositif d'interface.

9. Système de télécommunication selon l'une des revendications 7 ou 8, **caractérisé en ce que** le gestionnaire de mobilité est implanté au sein d'au moins un dispositif d'interface.

10. Dispositif apte à remplir les fonctions d'un émetteur/récepteur inclus dans un système de télécommunication selon l'une des revendications 1 à 9.

11. Procédé de transmission de données entre :
- au moins un émetteur/récepteur mobile (ERM),
- une pluralité de points d'accès (PA), chacun desquels étant apte à communiquer avec l'émetteur/récepteur mobile lorsque ledit émetteur/récepteur est situé dans une zone de couverture (ZA) dudit point d'accès, et
- un réseau de communication autorisant (NW) des communications entre lesdits points d'accès,
ledit procédé incluant au moins une étape d'identification par un gestionnaire de mobilité (GM), en fonction de conditions de fonctionnement des points d'accès, d'un point d'accès spécifique avec lequel l'émetteur/récepteur mobile doit établir une communication, lequel procédé incluant en outre une étape de mesure de qualité (M), exécutée par l'émetteur/récepteur mobile, d'une communication qu'il pourrait établir avec au moins un point d'accès voisin d'un point d'accès courant avec lequel ledit émetteur/récepteur mobile est en communication,
**caractérisé en ce que** l'étape de mesure de qualité est exécutée que lorsque la qualité de la communication entre l'émetteur/récepteur mobile et le point d'accès courant est inférieure à un seuil de référence prédéterminé.

12. Procédé de transmission selon la revendication 11, **caractérisé en ce qu'**il inclut en outre une étape de mémorisation par l'émetteur/récepteur mobile d'une valeur du seuil de référence après réception par ledit l'émetteur/récepteur de ladite valeur en provenance du gestionnaire de mobilité.

13. Procédé de transmission selon l'une des revendications 11 ou 12, **caractérisé en ce qu'**il inclut une étape de mémorisation par l'émetteur/récepteur mobile, lorsqu'il est en communication avec le point d'accès courant, d'une liste de points d'accès voisins du point d'accès courant, laquelle liste lui étant transmise par le gestionnaire de mobilité.

14. Procédé de transmission selon la revendication 13, **caractérisé en ce qu'**il inclut en outre une étape de création d'une liste de point d'accès voisins par le gestionnaire de mobilité, laquelle liste est établie en fonction d'informations d'environnement propres à l'émetteur/récepteur mobile auquel ladite liste est destinée.

15. Procédé de transmission selon la revendication 14, dans lequel les informations d'environnement propres à l'émetteur/récepteur mobile sont notamment représentatives de profils conformes à la liste suivante :
- appartenance d'un utilisateur de l'émetteur/récepteur à un groupe d'utilisateurs prédéterminé, et autorisation d'accès à au moins un point d'accès prédéterminé
- accordée audit groupe,
- acquisition préalable par l'utilisateur d'autorisations de communiquer avec différents points d'accès liés à des réseaux de communication de natures différentes, ou
- localisation géographique d'un utilisateur de l'émetteur/récepteur dans une zone prédéterminée, et autorisation d'accès à au moins un point d'accès prédéterminé réservée pour ladite zone.

16. Procédé de transmission selon l'une des revendications 11 à 15, **caractérisé en ce qu'**il inclut de plus une étape d'émission d'une requête de basculement par l'émetteur/récepteur mobile vers le gestionnaire de mobilité, aux fins de faire établir une communication dudit émetteur/récepteur avec un point d'accès voisin de son point d'accès courant, lorsqu'une mesure de qualité a établi qu'une communication avec un tel point d'accès voisin serait de meilleure qualité que la communication avec le point d'accès courant.

17. Procédé de transmission selon la revendication 16, **caractérisé en ce que**, la requête de basculement incluant des résultats de mesures de qualité effectuées par l'émetteur/récepteur mobile, l'étape d'identification inclut, destinées à être exécutées par le gestionnaire de mobilité :
- une sous-étape d'analyse desdits résultats,
- une sous-étape de déduction d'une telle· analyse et des conditions de fonctionnement des points d'accès d'une identité d'un point d'accès voisin spécifique avec lequel l'émetteur/récepteur devra entrer en communication, et
- une sous-étape de transmission audit émetteur/récepteur de ladite identité.

## Patentansprüche

1. Telekommunikationssystem (SYST), welches einschließt:
- mindestens einen mobilen Sender/Empfänger (ERM),
- eine Vielzahl von Zugangspunkten (PA), von denen jeder in der Lage ist, mit dem mobilen Sender/Empfänger zu kommunizieren, wenn sich der Sender/Empfänger in einem Abdeckungsbereich (ZA) des Zugangspunktes befindet, und
- ein Kommunikationsnetz (NW), das Kommunikationen zwischen den Zugangspunkten autorisiert,
- eine Mobilitätsverwaltung (GM), die in der Lage ist, abhängig von Betriebsbedingungen der Zugangspunkte einen spezifischen Zugangspunkt zu identifizieren, zu dem der mobile Sender/Empfänger eine Kommunikation herstellen soll, wobei der mobile Sender/Empfänger mit Messmitteln ausgestattet ist, um mindestens eine Qualitätsmessung (M) einer Kommunikation vorzunehmen, die er zu mindestens einem Zugangspunkt herstellen könnte, der zu einem aktuellen Zugangspunkt, mit dem sich der mobile Sender/Empfänger in Kommunikation befindet, benachbart ist,
**dadurch gekennzeichnet, dass** die Messmittel in der Lage sind, nur dann aktiviert zu werden, wenn die Qualität der Kommunikation zwischen dem mobilen Sender/Empfänger und dem aktuellen Zugangspunkt unter einer vorbestimmten Referenzschwelle liegt.

2. Telekommunikationssystem nach Anspruch 1, **dadurch gekennzeichnet, dass** der mobile Sender/Empfänger mit Speichermitteln ausgestattet ist, die dazu bestimmt sind, einen Wert der Referenzschwelle nach Empfang, durch den mobilen Sender/Empfänger, des von der Mobilitätsverwaltung stammenden Werts zu speichern.

3. Telekommunikationssystem nach einem der Ansprüche 1 oder 2, **dadurch gekennzeichnet, dass** der mobile Sender/Empfänger mit Speichermitteln ausgestattet ist, die dazu bestimmt sind, wenn er sich mit dem aktuellen Zugangspunkt in Kommunikation befindet, eine Liste von Zugangspunkten zu speichern, die zum aktuellen Zugangspunkt benachbart sind, welche Liste ihm von der Mobilitätsverwaltung übertragen wurde.

4. Telekommunikationssystem nach einem der Ansprüche 1 bis 3, **dadurch gekennzeichnet, dass** der mobile Sender/Empfänger mit Mitteln ausgestattet ist, um eine sogenannte Umschaltanfrage an die Mobilitätsverwaltung zu senden mit dem Zweck, mit einem Zugangspunkt, der zu seinem aktuellen Zugangspunkt benachbart ist, in Kommunikation zu treten, wenn eine Qualitätsmessung ergeben hat, dass eine Kommunikation mit einem solchen benachbarten Zugangspunkt von besserer Qualität wäre als die Kommunikation mit dem aktuellen Zugangspunkt.

5. Telekommunikationssystem nach Anspruch 4, **dadurch gekennzeichnet, dass** wenn die Umschaltanfrage Ergebnisse von Qualitätsmessungen einschließt, die vom mobilen Sender/Empfänger vorgenommen wurden, die Mobilitätsverwaltung mit Mitteln ausgestattet ist, um:
- die Ergebnisse zu analysieren,
- aus einer solchen Analyse und den Betriebsbedingungen der Zugangspunkte eine Identität eines spezifischen benachbarten Zugangspunktes abzuleiten, mit dem der Sender/Empfänger in Kommunikation treten soll, und
- die Identität an den Sender/Empfänger zu übertragen.

6. Telekommunikationssystem nach einem der Ansprüche 1 bis 5, **dadurch gekennzeichnet, dass** es weiter eine Datenbank einschließt, die mit der Mobilitätsverwaltung assoziiert und dazu bestimmt ist, Informationen bezüglich der Betriebsbedingungen der Zugangspunkte zu enthalten.

7. Telekommunikationssystem nach einem der Ansprüche 1 bis 6, **dadurch gekennzeichnet, dass** es weiter mindestens zwei Schnittstellenvorrichtungen zwischen den Zugangspunkten und dem Kommunikationsnetz einschließt, wobei jede Schnittstellenvorrichtung in der Lage ist, mit einer vorbestimmten Gruppe von Zugangspunkten zu kommunizieren.

8. Telekommunikationssystem nach Anspruch 7, **dadurch gekennzeichnet, dass** jeder Zugangspunkt nur in der Lage ist, mit einer einzigen Schnittstellenvorrichtung zu kommunizieren.

9. Telekommunikationssystem nach einem der Ansprüche 7 oder 8, **dadurch gekennzeichnet, dass** die Mobilitätsverwaltung in mindestens einer Schnittstellenvorrichtung eingebettet ist.

10. Vorrichtung, die in der Lage ist, die Funktionen eines Senders/Empfängers zu erfüllen, der in einem Telekommunikationssystem nach einem der Ansprüche 1 bis 9 eingeschlossen ist.

11. Verfahren zur Datenübertragung zwischen:
- mindestens einem mobilen Sender/Empfänger (ERM),
- einer Vielzahl von Zugangspunkten (PA), von denen jeder in der Lage ist, mit dem mobilen Sender/Empfänger zu kommunizieren, wenn sich der Sender/Empfänger in einem Abdeckungsbereich (ZA) des Zugangspunktes befindet, und
- einem Kommunikationsnetz (NW), das Kommunikationen zwischen den Zugangspunkten autorisiert,
wobei das Verfahren mindestens einen Schritt des Identifizierens, durch eine Mobilitätsverwaltung (GM), eines spezifischen Zugangspunktes abhängig von Betriebsbedingungen der Zugangspunkte einschließt, zu dem der mobile Sender/Empfänger eine Kommunikation herstellen soll, wobei das Verfahren weiter einen durch den mobilen Sender/Empfänger ausgeführten Schritt der Qualitätsmessung (M) einer Kommunikation einschließt, die er zu mindestens einem Zugangspunkt herstellen könnte, der zu einem aktuellen Zugangspunkt, mit dem sich der mobile Sender/Empfänger in Kommunikation befindet, benachbart ist,
**dadurch gekennzeichnet, dass** der Schritt der Qualitätsmessung ausgeführt wird, wenn die Qualität der Kommunikation zwischen dem mobilen Sender/Empfänger und dem aktuellen Zugangspunkt unter einer vorbestimmten Referenzschwelle liegt.

12. Übertragungsverfahren nach Anspruch 11, **dadurch gekennzeichnet, dass** es weiter einen Schritt des Speicherns, durch den mobilen Sender/Empfänger, eines Wertes der Referenzschwelle nach Empfang, durch den Sender/Empfänger, des von der Mobilitätsverwaltung stammenden Wertes einschließt.

13. Übertragungsverfahren nach einem der Ansprüche 11 oder 12, **dadurch gekennzeichnet, dass** es einen Schritt des Speicherns, durch den mobilen Sender/Empfänger, wenn sich derselbe mit den aktuellen Zugangspunkt in Kommunikation befindet, einer Liste von Zugangspunkten einschließt, die zum aktuellen Zugangspunkt benachbart sind, welche Liste ihm von der Mobilitätsverwaltung übertragen wurde.

14. Übertragungsverfahren nach Anspruch 13, **dadurch gekennzeichnet, dass** es weiter einen Schritt des Erstellens einer Liste von benachbarten Zugangspunkten durch die Mobilitätsverwaltung einschließt, welche Liste abhängig von Umgebungsinformationen erstellt wird, die dem mobilen Sender/Empfänger, für den die Liste bestimmt ist, eigen sind.

15. Übertragungsverfahren nach Anspruch 14, wobei die Umgebungsinformationen, die dem mobilen Sender/Empfänger eigen sind, insbesondere für Profile gemäß der folgenden Liste repräsentativ sind:
- Zugehörigkeit eines Benutzers des Senders/Empfängers zu einer vorbestimmten Benutzergruppe, und Autorisierung zum Zugriff auf mindestens einen vorbestimmten Zugangspunkt,
- Zulassung zur Gruppe,
- vorhergehender Erwerb, durch den Benutzer, von Autorisierungen zum Kommunizieren mit unterschiedlichen Zugangspunkten, die mit Kommunikationsnetzen unterschiedlicher Arten verknüpft sind, oder
- geographischer Standort eines Benutzers des Senders/Empfängers in einem vorbestimmten Bereich, und Autorisierung zum Zugriff auf mindestens einen vorbestimmten Zugangspunkt, der für den Bereich reserviert ist.

16. Übertragungsverfahren nach einem der Ansprüche 11 bis 15, **dadurch gekennzeichnet, dass** es darüber hinaus einen Schritt des Sendens einer Umschaltanfrage durch den mobilen Sender/Empfänger an die Mobilitätsverwaltung einschließt mit dem Zweck, eine Kommunikation des Senders/Empfängers zu einem Zugangspunkt herstellen zu lassen, der zu seinem aktuellen Zugangspunkt benachbart ist, wenn eine Qualitätsmessung ergeben hat, dass eine Kommunikation mit einem solchen benachbarten Zugangspunkt von besserer Qualität wäre als die Kommunikation mit dem aktuellen Zugangspunkt.

17. Übertragungsverfahren nach Anspruch 16, **dadurch gekennzeichnet, dass** wenn die Umschaltanfrage Ergebnisse von Qualitätsmessungen einschließt, die vom mobilen Sender/Empfänger vorgenommen wurden, der Schritt des Identifizierens einschließt:
- einen Teilschritt des Analysierens der Ergebnisse,
- einen Teilschritt des Ableitens, aus einer solchen Analyse und den Betriebsbedingungen der Zugangspunkte, einer Identität eines spezifischen benachbarten Zugangspunktes, mit dem der Sender/Empfänger in Kommunikation treten soll, und
- einen Teilschritt des Übertragens der Identität an den Sender/Empfänger.

## Claims

1. A telecommunication system (SYST) including:
- at least one mobile transceiver (ERM),
- a plurality of access points (PA), each of which being able to communicate with the mobile transceiver when said transceiver is located in a coverage area (ZA) of said access point, and
- a communication network (NW) enabling communications between said access points,
- a mobility manager (GM) able to identify, as a function of operating conditions of the access points, a specific access point with which the mobile transceiver must establish a communication, the mobile transceiver being provided with measuring means to perform at least one quality measurement (M) of a communication it could establish with at least one neighbouring access point of a current access point with which said mobile transceiver is in communication,
**characterised in that** the measuring means are only able to be activated when the quality of the communication between the mobile transceiver and the current access point is lower than a predetermined reference threshold.

2. The telecommunication system according to claim 1, **characterised in that** the mobile transceiver is provided with storage means for storing a value of the reference threshold after reception by the mobile transceiver of said value from the mobility manager.

3. The telecommunication system according to one of claims 1 and 2, **characterised in that** the mobile transceiver is provided with storage means, for storing, when it is in communication with the current access point, a list of neighbouring access points of the current access point, which list has been transmitted to it by the mobility manager.

4. The telecommunication system according to one of claims 1 to 3, **characterised in that** the mobile transceiver is provided with means for sending a request, known as a switchover request, to the mobility manager for the purpose of starting communication with a neighbouring access point of its current access point, when a quality measurement has established that a communication with such a neighbouring access point would be of a better quality than the communication with the current access point.

5. The telecommunication system according to claim 4, **characterised in that**, the switchover request including results of quality measurements performed by the mobile transceiver, the mobility manager is provided with means for:
- analysing said results,
- deducing from such an analysis and the operating conditions of the access points an identity of a specific neighbouring access point with which the transceiver will have to start a communication, and
- transmitting to said transceiver said identity.

6. The telecommunication system according to one of claims 1 to 5, **characterised in that** it further includes a database associated with the mobility manager and for containing information relative to the operating conditions of the access points.

7. The telecommunication system according to one of claims 1 to 6, **characterised in that** it further includes at least two interface devices between the access points and the communication network, each interface device being able to communicate with a predetermined group of access points.

8. The telecommunication system according to claim 7, **characterised in that** each access point is only able to communicate with only one interface device.

9. The telecommunication system according to one of claims 7 and 8, **characterised in that** the mobility manager is implanted within at least one interface device.

10. A device able to fulfil the functions of a transceiver included in a telecommunication system according to one of claims 1 to 9.

11. A method for transmitting data between:
- at least one mobile transceiver (ERM),
- a plurality of access points (PA), each of which being able to communicate with the mobile transceiver when said transceiver is located in a coverage area (ZA) of said access point, and
- a communication network (NW) enabling communications between said access points,
said method including at least one step of identifying by a mobility manager (GM), as a function of operating conditions of the access points, a specific access point with which the mobile transceiver must establish a communication, said method further including a step of measuring the quality (M), executed by the mobile transceiver, of a communication it could establish with at least one neighbouring access point of a current access point with which said mobile transceiver is in communication,
**characterised in that** the step of measuring the quality is only executed when the quality of the communication between the mobile transceiver and the current access point is lower than a predetermined reference threshold.

12. The transmitting method according to claim 11, **characterised in that** it further includes a step of storing by the mobile transceiver a value of the reference threshold after reception by said transceiver of said value from the mobility manager.

13. The transmitting method according to one of claims 11 and 12, **characterised in that** it includes a step of storing by the mobile transceiver, when it is in communication with the current access point, a list of neighbouring access points of the current access point, which list has been transmitted to it by the mobility manager.

14. The transmitting method according to claim 13, **characterised in that** it further includes a step of creating a list of neighbouring access points by the mobility manager, which list is established as a function of environment information particular to the mobile transceiver to which said list is intended.

15. The transmitting method according to claim 14, wherein the environment information particular to the mobile transceiver are particularly representative of profiles in accordance with the following list:
- membership of a user of the transceiver in a predetermined group of users, and authorisation to access at least one predetermined access point granted to said group,
- prior acquisition by the user of authorisations to communicate with different access points linked to communication networks of different natures, or
- geographic location of a user of the transceiver in a predetermined area, and authorisation to access at least one predetermined access point reserved for said area.

16. The transmitting method according to one of claims 11 to 15, **characterised in that** it further includes a step of emitting a switchover request by the mobile transceiver to the mobility manager, for the purpose of having a communication of said transceiver established with a neighbouring access point of its current access point, when the quality measurement has established that a communication with such a neighbouring access point would be of better quality than the communication with the current access point.

17. The transmitting method according to claim 16, **characterised in that**, the switchover request including results of the quality measurements performed by the mobile transceiver, the identification step includes, for being executed by the mobility manager:
- a sub-step of analysing said results,
- a sub-step of deducing from such an analysis and the operating conditions of the access points an identity of a specific neighbouring access point with which the transceiver will have to start a communication, and
- a sub-step of transmitting to said transceiver said identity.
